# EUROPEAN PATENT APPLICATION

(11) **EP 4 580 302 A2**
(43) Date of publication of application: **02.07.2025**
(21) Application number: 25158634.3
(22) Date of filing: 04.02.2021
(51) Int. Cl.: H04W 76/14

(54) **COMMUNICATION METHOD AND APPARATUS**

(62) Divisional of application: 21923744.3
(71) Applicant: Huawei Technologies Co., Ltd., Shenzhen, Guangdong 518129 (CN)
(72) Inventor: XU, Shengfeng, Shenzhen, 518129 (CN)
(74) Representative: Isarpatent

(57) **Abstract**

This application provides a communication method. The method includes: A relay device receives a first data packet from a first terminal through a first transmission link, where the first data packet includes an identifier of a second terminal and data to be sent to the second terminal, the first transmission link is a transmission link between the relay device and the first terminal, the first transmission link is used by the first terminal to communicate with at least two communication devices, and the at least two communication devices include the second terminal; and the relay device sends a second data packet to the second terminal through a second transmission link based on the identifier of the second terminal, where the second data packet includes the data to be sent to the second terminal, and the second transmission link is a transmission link between the relay device and the second terminal. A same transmission link between the first terminal and the relay device is reused. This can save transmission resources, and reduce signaling overheads caused by maintaining the transmission link. Further, the relay device can identify a target terminal of a data packet based on an identifier of the target terminal in the data packet, so that the first terminal and the relay device send data to different target terminals through the same transmission link.

## Description

### TECHNICAL FIELD

This application relates to the communication field, and more specifically, to a communication method and apparatus.

### BACKGROUND

With rapid development of mobile communication, universal use of new service types, for example, data services such as video chat and virtual reality (virtual reality, VR)/augmented reality (augmented reality, AR), increases a bandwidth requirement of a user. Device-to-device (device-to-device, D2D) communication allows direct communication between user equipments (user equipment, UE), and the user equipments may share spectrum resources with cell users under control of a cell network, so that utilization of the spectrum resources is effectively improved. When a distance between source UE (Source UE) and target UE (Target UE) that perform D2D communication is long, assistance may be performed by using relay UE (relay UE). The source UE is UE that can discover the target UE by using the relay UE, and the target UE is UE that is discovered by the source UE by using the relay UE.

In a layer 2-based (Layer 2 based) D2D relay scenario, when a source terminal communicates with a target terminal 1 by using a relay device, a PCS link (PCS link) (denoted as a PCS link 1) is established between the source terminal and the relay device. A PCS link (denoted as a PCS link 2) is established between the relay device and the target terminal 1. The PCS link 1 between the relay device and the source terminal is only used to transmit data between the source terminal and the target terminal 1, and the PCS link 2 between the relay device and the source terminal is only used to transmit data between the source terminal and the target terminal 1. In this way, the relay device forwards data by using link mapping (link mapping), for example, mapping between the PCS link 1 and the PCS link 2.

Further, when the source terminal simultaneously communicates with a target terminal 2 by using the relay device, a PCS link (denoted as a PCS link 3) is established between the source terminal and the relay device, and a PCS link (denoted as a PCS link 4) is established between the relay device and the target terminal 2. The relay device forwards data between the source terminal and the target terminal 2 according to a correspondence between the PCS link 3 and the PCS link 4.

In other words, when the source terminal communicates with different target terminals, different PCS links are established between the relay device and the source terminal to transmit data of the different target terminals. In addition, states of the different PCS links need to be maintained between the relay device and the source terminal, resulting in high signaling overheads.

### SUMMARY

This application provides a communication method and apparatus, to reuse a PCS link between source UE and relay UE (Relay UE) in a relay scenario, to reduce overheads for maintaining the PC5 link and save communication resources.

According to a first aspect, this application provides a communication method. The method includes: A relay device receives a first data packet from a first terminal through a first transmission link, where the first data packet includes an identifier of a second terminal and data to be sent to the second terminal, the first transmission link is a transmission link between the relay device and the first terminal, the first transmission link is used by the first terminal to communicate with at least two communication devices, and the at least two communication devices include the second terminal; and the relay device sends a second data packet to the second terminal through a second transmission link based on the identifier of the second terminal, where the second data packet includes the data to be sent to the second terminal, and the second transmission link is a transmission link between the relay device and the second terminal.

In the foregoing technical solution, the first terminal sends the data packet to the relay device on the reused first transmission link, and the relay device forwards the data packet to the second terminal based on the identifier of the second terminal. The first transmission link is reused, and a quantity of transmission links can be reduced, to reduce overheads for maintaining the transmission link. In addition, after the first transmission link is reused, the relay device can distinguish, based on the identifier of the second terminal, that a target terminal of the data packet is the second terminal, so that different target terminal data is distinguished between the first terminal and the relay device on a same first transmission link.

With reference to the first aspect, in some implementations of the first aspect, the method further includes: The relay device receives a third data packet from the third terminal through a third transmission link, where the third data packet includes an identifier of the first terminal and data to be sent to the first terminal, and the third transmission link is a transmission link between the relay device and the third terminal; and the relay device sends a fourth data packet to the first terminal through the first transmission link based on the identifier of the first terminal, where the fourth data packet includes the data to be sent to the first terminal.

In the foregoing technical solution, the third terminal sends the data packet to the first terminal, and reuses the first transmission link, thereby reducing a quantity of transmission links, and reducing overheads for maintaining the transmission link. In addition, after the first transmission link is reused, the relay device can distinguish, based on the identifier of the first terminal, that a target terminal of the data packet is the first terminal, so that different target terminal data is distinguished on a same first transmission link.

With reference to the first aspect, in some implementations of the first aspect, the method further includes: The relay device receives a fifth data packet from the first terminal through the first transmission link, where the fifth data packet includes an identifier of the fourth terminal and data to be sent to the fourth terminal; and the relay device sends a sixth data packet to the fourth terminal through a fourth transmission link based on the identifier of the fourth terminal, where the sixth data packet includes the data to be sent to the fourth terminal, and the fourth transmission link is a transmission link between the relay device and the fourth terminal.

In the foregoing technical solution, the first terminal can communicate with different target terminals by using the relay device. For example, the first terminal communicates with the fourth terminal by using the relay device, and reuses the first transmission link between the first terminal and the relay device. The first transmission link is reused, and a quantity of transmission links can be reduced, to reduce overheads for maintaining the transmission link. In addition, after the first transmission link is reused, the relay device can distinguish, based on the identifier of the fourth terminal, that a target terminal of the data packet is the fourth terminal, so that different target terminal data is distinguished between the first terminal and the relay device on a same first transmission link.

With reference to the first aspect, in some implementations of the first aspect, the method further includes: The relay device receives a seventh data packet from the first terminal through the first transmission link; and if the seventh data packet does not include an identifier of any terminal, or the seventh data packet includes an identifier of the relay device, the relay device obtains data in the seventh data packet.

In the foregoing technical solution, the relay device can determine, based on whether the data packet includes the identifier of the terminal, whether the target terminal of the data packet sent by the first terminal is the relay device.

With reference to the first aspect, in some implementations of the first aspect, that the relay device sends a second data packet to the second terminal based on the identifier of the second terminal through a second transmission link includes: The relay device obtains identification information of the second transmission link based on the identifier of the second terminal and a correspondence; and the relay device sends the second data packet to the second terminal through the second transmission link based on the identification information of the second transmission link.

The correspondence includes:
a correspondence between the identifier of the second terminal and the identification information of the second transmission link; or
a correspondence between the identifier of the second terminal, a layer 2 identifier of the relay device, and the identification information of the second transmission link.

With reference to the first aspect, in some implementations of the first aspect, the identification information of the second transmission link includes a layer 2 identifier of the second terminal corresponding to the second transmission link.

With reference to the first aspect, in some implementations of the first aspect, that the relay device obtains identification information of the second transmission link based on the identifier of the second terminal and a correspondence includes: An access stratum AS layer of the relay device obtains the identification information of the second transmission link based on the identifier of the second terminal and the correspondence.

With reference to the first aspect, in some implementations of the first aspect, the method further includes: A proximity-based service ProSe layer of the relay device provides the identifier of the second terminal and the identification information of the second transmission link for the AS layer of the relay device; and the AS layer of the relay device establishes the correspondence.

With reference to the first aspect, in some implementations of the first aspect, the method further includes: A ProSe layer of the relay device provides the identifier of the second terminal, the layer 2 identifier of the relay device, and the identification information of the second transmission link for the AS layer of the relay device; and the AS layer of the relay device establishes the correspondence.

With reference to the first aspect, in some implementations of the first aspect, the first data packet further includes the layer 2 identifier of the relay device.

With reference to the first aspect, in some implementations of the first aspect, the identifier of the second terminal includes: the layer 2 identifier of the second terminal; a temporary identifier allocated by the relay device to the second terminal; an application layer identifier of the second terminal; or a temporary identifier allocated by the first terminal to the second terminal.

With reference to the first aspect, in some implementations of the first aspect, the method further includes:
The relay device sends the identifier of the second terminal to the first terminal.

With reference to the first aspect, in some implementations of the first aspect, the identifier of the second terminal is carried in a link modification request message or a direct communication accept message.

With reference to the first aspect, in some implementations of the first aspect, the method further includes: The relay device receives the identifier of the second terminal from the first terminal.

With reference to the first aspect, in some implementations of the first aspect, the identifier of the second terminal is carried in a direct communication request message or a link modification request message.

With reference to the first aspect, in some implementations of the first aspect, the method further includes: The relay device sends the identifier of the relay device to the first terminal, where the identifier of the relay device is a temporary identifier allocated by the relay device to the relay device, the layer 2 identifier of the relay device, or an application layer identifier of the relay device; or the relay device receives the identifier of the relay device from the first terminal, where the identifier of the relay device is a temporary identifier allocated by the first terminal to the relay device.

With reference to the first aspect, in some implementations of the first aspect, the method further includes: The relay device sends the identifier of the first terminal to the second terminal, where the identifier of the first terminal is the temporary identifier allocated by the relay device to the first terminal, a layer 2 identifier of the first terminal, or an application layer identifier of the first terminal.

With reference to the first aspect, in some implementations of the first aspect, the identifier of the first terminal is carried in the direct communication request message or the link modification request message.

According to a second aspect, a communication method is provided. The method includes: A first terminal sends a first data packet to a relay device through a first transmission link, where the first data packet includes an identifier of a second terminal and data to be sent to the second terminal, and the first transmission link is a transmission link between the first terminal and the relay device; and the first transmission link is used by the first terminal to communicate with at least two communication devices, and the at least two communication devices include the second terminal.

With reference to the second aspect, in some implementations of the second aspect, the method further includes: The first terminal receives a fourth data packet from the relay device through the first transmission link, where the fourth data packet includes data to be sent to the first terminal.

With reference to the second aspect, in some implementations of the second aspect, the method further includes: The first terminal sends a fifth data packet to the relay device through the first transmission link, where the fifth data packet includes an identifier of the fourth terminal and data to be sent to the fourth terminal.

With reference to the second aspect, in some implementations of the second aspect, the method further includes: The first terminal sends a seventh data packet to the relay device through the first transmission link, where the seventh data packet includes data to be sent by the first terminal to the relay device; or the seventh data packet includes an identifier of the relay device and data to be sent by the first terminal to the relay device.

With reference to the second aspect, in some implementations of the second aspect, the method further includes: The first terminal generates the first data packet.

With reference to the second aspect, in some implementations of the second aspect, that the first terminal generates the first data packet includes: An access stratum AS layer of the first terminal generates the first data packet based on the identifier of the second terminal and the data to be sent to the second terminal.

With reference to the second aspect, in some implementations of the second aspect, the first data packet further includes a layer 2 identifier of the relay device.

With reference to the second aspect, in some implementations of the second aspect, the method further includes: The AS layer of the first terminal receives an identifier of a quality of service QoS flow, where the QoS flow is used to carry the data to be sent to the second terminal, and the first transmission link includes the QoS flow; and the AS layer of the first terminal obtains the identifier of the second terminal based on a correspondence between the identifier of the QoS flow and the identifier of the second terminal.

With reference to the second aspect, in some implementations of the second aspect, the method further includes: A proximity-based service ProSe layer of the first terminal provides the identifier of the second terminal and the identifier of the QoS flow for the AS layer of the first terminal; and the AS layer of the first terminal establishes the correspondence between the identifier of the QoS flow and the identifier of the second terminal.

With reference to the second aspect, in some implementations of the second aspect, the method further includes: The ProSe layer of the first terminal determines the identifier of the second terminal; and the ProSe layer of the first terminal provides the identifier of the second terminal and the data to be sent to the second terminal to the AS layer of the first terminal.

With reference to the second aspect, in some implementations of the second aspect, the identifier of the second terminal includes: the layer 2 identifier of the second terminal; a temporary identifier allocated by the relay device to the second terminal; an application layer identifier of the second terminal; or a temporary identifier allocated by the first terminal to the second terminal.

With reference to the second aspect, in some implementations of the second aspect, the method further includes: The first terminal sends the identifier of the second terminal to the relay device.

With reference to the second aspect, in some implementations of the second aspect, the identifier of the second terminal is carried in a link modification request message or a direct communication accept message.

With reference to the second aspect, in some implementations of the second aspect, the method further includes: The first terminal receives the identifier of the second terminal from the relay device.

With reference to the second aspect, in some implementations of the second aspect, the identifier of the second terminal is carried in a direct communication request message or a link modification request message.

With reference to the second aspect, in some implementations of the second aspect, the method further includes: The first terminal receives the identifier of the relay device from the relay device, where the identifier of the relay device is a temporary identifier allocated by the relay device to the relay device, a layer 2 identifier of the relay device, or an application layer identifier of the relay device; or the first terminal sends the identifier of the relay device to the relay device, where the identifier of the relay device is a temporary identifier allocated by the first terminal to the relay device.

According to a third aspect, a communication method is provided. The method includes: A third terminal sends a third data packet to a relay device through a third transmission link, where the third data packet includes an identifier of a first terminal and data to be sent to the first terminal, and the third transmission link is a transmission link between the relay device and the third terminal.

According to a fourth aspect, a communication apparatus is provided. The apparatus includes: a first receiving unit, configured to receive a first data packet from a first terminal through a first transmission link, where the first data packet includes an identifier of a second terminal and data to be sent to the second terminal, the first transmission link is a transmission link between the relay device and the first terminal, the first transmission link is used by the first terminal to communicate with at least two communication devices, and the at least two communication devices include the second terminal; and a first sending unit, configured to send a second data packet to the second terminal through a second transmission link based on the identifier of the second terminal, where the second data packet includes the data to be sent to the second terminal, and the second transmission link is a transmission link between the relay device and the second terminal.

With reference to the fourth aspect, in some implementations of the fourth aspect, the first receiving unit is further configured to receive a third data packet from the third terminal through a third transmission link, where the third data packet includes an identifier of the first terminal and data to be sent to the first terminal, and the third transmission link is a transmission link between the relay device and the third terminal; and the first sending unit is further configured to send a fourth data packet to the first terminal through the first transmission link based on the identifier of the first terminal, where the fourth data packet includes the data to be sent to the first terminal.

With reference to the fourth aspect, in some implementations of the fourth aspect, the first receiving unit is further configured to receive a fifth data packet from the first terminal through the first transmission link, where the fifth data packet includes an identifier of the fourth terminal and data to be sent to the fourth terminal; and the first sending unit is further configured to send a sixth data packet to the fourth terminal through a fourth transmission link based on the identifier of the fourth terminal, where the sixth data packet includes the data to be sent to the fourth terminal, and the fourth transmission link is a transmission link between the relay device and the fourth terminal.

With reference to the fourth aspect, in some implementations of the fourth aspect, the apparatus further includes a first processing unit. The first receiving unit is further configured to receive a seventh data packet from the first terminal through the first transmission link; and if the seventh data packet does not include an identifier of any terminal, or the seventh data packet includes an identifier of the relay device, the first processing unit is configured to obtain data in the seventh data packet.

With reference to the fourth aspect, in some implementations of the fourth aspect, that the first sending unit sends a second data packet to the second terminal based on the identifier of the second terminal through a second transmission link includes: The first processing unit obtains identification information of the second transmission link based on the identifier of the second terminal and a correspondence; and the first sending unit sends the second data packet to the second terminal through the second transmission link based on the identification information of the second transmission link, where the correspondence includes: a correspondence between the identifier of the second terminal and the identification information of the second transmission link; or a correspondence between the identifier of the second terminal, a layer 2 identifier of the relay device, and the identification information of the second transmission link.

With reference to the fourth aspect, in some implementations of the fourth aspect, the identification information of the second transmission link includes a layer 2 identifier of the second terminal corresponding to the second transmission link.

With reference to the fourth aspect, in some implementations of the fourth aspect, that the first processing unit obtains identification information of the second transmission link based on the identifier of the second terminal and a correspondence includes: An access stratum AS layer of the first processing unit obtains the identification information of the second transmission link based on the identifier of the second terminal and the correspondence.

With reference to the fourth aspect, in some implementations of the fourth aspect, the first processing unit is further configured to: a proximity-based service ProSe layer of the first processing unit provides the identifier of the second terminal and the identification information of the second transmission link for the AS layer of the first processing unit; and the AS layer of the first processing unit establishes the correspondence.

With reference to the fourth aspect, in some implementations of the fourth aspect, the first processing unit is further configured to: a ProSe layer of the first processing unit provides the identifier of the second terminal, the layer 2 identifier of the relay device, and the identification information of the second transmission link for the AS layer of the first processing unit; and the AS layer of the first processing unit establishes the correspondence.

With reference to the fourth aspect, in some implementations of the fourth aspect, the first data packet further includes the layer 2 identifier of the relay device.

With reference to the fourth aspect, in some implementations of the fourth aspect, the identifier of the second terminal includes: the layer 2 identifier of the second terminal; a temporary identifier allocated by the relay device to the second terminal; an application layer identifier of the second terminal; or a temporary identifier allocated by the first terminal to the second terminal.

With reference to the fourth aspect, in some implementations of the fourth aspect, the first sending unit is further configured to send the identifier of the second terminal to the first terminal.

With reference to the fourth aspect, in some implementations of the fourth aspect, the identifier of the second terminal is carried in a link modification request message or a direct communication accept message.

With reference to the fourth aspect, in some implementations of the fourth aspect, the first receiving unit is further configured to receive the identifier of the second terminal from the first terminal.

With reference to the fourth aspect, in some implementations of the fourth aspect, the identifier of the second terminal is carried in a direct communication request message or a link modification request message.

With reference to the fourth aspect, in some implementations of the fourth aspect, the first sending unit is further configured to send the identifier of the relay device to the first terminal, where the identifier of the relay device is a temporary identifier allocated by the relay device to the relay device, the layer 2 identifier of the relay device, or an application layer identifier of the relay device; or the first receiving unit is further configured to receive the identifier of the relay device from the first terminal, where the identifier of the relay device is a temporary identifier allocated by the first terminal to the relay device.

With reference to the fourth aspect, in some implementations of the fourth aspect, the first sending unit is further configured to send the identifier of the first terminal to the second terminal, where the identifier of the first terminal is the temporary identifier allocated by the relay device to the first terminal, a layer 2 identifier of the first terminal, or an application layer identifier of the first terminal.

With reference to the fourth aspect, in some implementations of the fourth aspect, the identifier of the first terminal is carried in the direct communication request message or the link modification request message.

According to a fifth aspect, a communication apparatus is provided. The apparatus includes: a second sending unit, configured to send a first data packet to a relay device through a first transmission link, where the first data packet includes an identifier of a second terminal and data to be sent to the second terminal, and the first transmission link is a transmission link between the first terminal and the relay device; and the first transmission link is used by the first terminal to communicate with at least two communication devices, and the at least two communication devices include the second terminal.

With reference to the fifth aspect, in some implementations of the fifth aspect, the apparatus further includes: a second receiving unit, configured to receive a fourth data packet from the relay device through the first transmission link, where the fourth data packet includes data to be sent to the first terminal.

With reference to the fifth aspect, in some implementations of the fifth aspect, the second sending unit is further configured to send a fifth data packet to the relay device through the first transmission link, where the fifth data packet includes an identifier of the fourth terminal and data to be sent to the fourth terminal.

With reference to the fifth aspect, in some implementations of the fifth aspect, the second sending unit is further configured to send a seventh data packet to the relay device through the first transmission link, where the seventh data packet includes data to be sent by the first terminal to the relay device; or the seventh data packet includes an identifier of the relay device and data to be sent by the first terminal to the relay device.

With reference to the fifth aspect, in some implementations of the fifth aspect, the apparatus further includes: a second processing unit, configured to generate the first data packet.

With reference to the fifth aspect, in some implementations of the fifth aspect, that the second processing unit generates the first data packet includes: An access stratum AS layer of the second processing unit generates the first data packet based on the identifier of the second terminal and the data to be sent to the second terminal.

With reference to the fifth aspect, in some implementations of the fifth aspect, the first data packet further includes a layer 2 identifier of the relay device.

With reference to the fifth aspect, in some implementations of the fifth aspect, the second receiving unit is further configured to: the AS layer of the second receiving unit receives an identifier of a quality of service QoS flow, where the QoS flow is used to carry the data to be sent to the second terminal, and the first transmission link includes the QoS flow; and the AS layer of the second receiving unit obtains the identifier of the second terminal based on a correspondence between the identifier of the QoS flow and the identifier of the second terminal.

With reference to the fifth aspect, in some implementations of the fifth aspect, the second processing unit is further configured to: a proximity-based service ProSe layer of the second processing unit provides the identifier of the second terminal and the identifier of the QoS flow for the AS layer of the second processing unit; and the AS layer of the second processing unit establishes the correspondence between the identifier of the QoS flow and the identifier of the second terminal.

With reference to the fifth aspect, in some implementations of the fifth aspect, the second processing unit is further configured to: the ProSe layer of the second processing unit determines the identifier of the second terminal; and the ProSe layer of the second processing unit provides the identifier of the second terminal and the data to be sent to the second terminal to the AS layer of the second processing unit.

With reference to the fifth aspect, in some implementations of the fifth aspect, the identifier of the second terminal includes: the layer 2 identifier of the second terminal; a temporary identifier allocated by the relay device to the second terminal; an application layer identifier of the second terminal; or a temporary identifier allocated by the first terminal to the second terminal.

With reference to the fifth aspect, in some implementations of the fifth aspect, the second sending unit is further configured to send the identifier of the second terminal to the relay device.

With reference to the fifth aspect, in some implementations of the fifth aspect, the identifier of the second terminal is carried in a link modification request message or a direct communication accept message.

With reference to the fifth aspect, in some implementations of the fifth aspect, the second receiving unit is further configured to receive the identifier of the second terminal from the relay device.

With reference to the fifth aspect, in some implementations of the fifth aspect, the identifier of the second terminal is carried in a direct communication request message or a link modification request message.

With reference to the fifth aspect, in some implementations of the fifth aspect, the second receiving unit is further configured to receive the identifier of the relay device from the relay device, where the identifier of the relay device is a temporary identifier allocated by the relay device to the relay device, a layer 2 identifier of the relay device, or an application layer identifier of the relay device; or the second sending unit is further configured to send the identifier of the relay device to the relay device, where the identifier of the relay device is a temporary identifier allocated by the first terminal to the relay device.

According to a sixth aspect, a communication apparatus is provided. The communication apparatus has a function of implementing the method according to the foregoing aspects. This function may be implemented by using hardware, or may be implemented by executing corresponding software by hardware. The hardware or the software includes one or more modules corresponding to the foregoing functions.

According to a seventh aspect, a communication apparatus is provided. The apparatus includes a processor. The processor is coupled to a memory, and is configured to invoke a computer program from the memory and run the computer program, to perform the method according to any one of the foregoing aspects or the possible implementations of the foregoing aspects.

According to an eighth aspect, a communication apparatus is provided. The apparatus includes a processor and a memory. The memory is configured to store a computer program, and the processor is configured to invoke the computer program from the memory and run the computer program, so that the communication device performs the method according to any one of the foregoing aspects or the possible implementations of the foregoing aspects.

According to a ninth aspect, an apparatus (for example, the apparatus may be a chip system) is provided. The apparatus includes a processor, configured to support the communication apparatus in implementing functions in the foregoing aspects. In a possible design, the apparatus further includes a memory, and the memory is configured to store program instructions and data that are necessary for the communication apparatus. When the apparatus is the chip system, the apparatus may include a chip, or may include the chip and another discrete component.

According to a tenth aspect, a computer-readable storage medium is provided, and is configured to store a computer program. The computer program includes instructions for performing the method according to any one of the foregoing aspects or the possible implementations of the foregoing aspects.

According to an eleventh aspect, a computer program product is provided, and includes a computer program. When the computer program is run on a computer device, the computer device is enabled to perform the method according to the foregoing aspects.

According to a twelfth aspect, a communication system is provided. The system includes a relay device and a first terminal. The relay device is configured to perform the method according to any one of claims 1 to 19, and the first terminal is configured to perform the method according to any one of claims 20 to 34.

### BRIEF DESCRIPTION OF DRAWINGS

FIG. 1 is a schematic diagram of a network architecture to which an embodiment of this application is applicable;
FIG. 2 is a schematic diagram of a QoS model based on a QoS flow according to an embodiment of this application;
FIG. 3 is a schematic flowchart of a communication method according to this application.
FIG. 4A, FIG. 4B, FIG. 4C, FIG. 4D, and FIG. 4E are a schematic flowchart of another communication method according to this application;
FIG. 5A, FIG. 5B, FIG. 5C, and FIG. 5D are a schematic flowchart of another communication method according to this application;
FIG. 6A, FIG. 6B, FIG. 6C, and FIG. 6D are schematic flowchart of another communication method according to this application;
FIG. 7A, FIG. 7B, FIG. 7C, and FIG. 7D are a schematic flowchart of another communication method according to this application;
FIG. 8A, FIG. 8B, FIG. 8C, and FIG. 8D are a schematic flowchart of another communication method according to this application;
FIG. 9 is a schematic flowchart of another communication method according to this application;
FIG. 10 is a schematic block diagram of a communication apparatus according to an embodiment of this application; and
FIG. 11 is another schematic block diagram of a communication apparatus according to an embodiment of this application.

### DESCRIPTION OF EMBODIMENTS

The following describes technical solutions of this application with reference to accompanying drawings.

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) communication system, or a future new radio (new radio, NR) communication system.

A terminal or a relay device in embodiments of this application may be user equipment (user equipment, UE), a subscriber unit, a subscriber station, a mobile station, a remote station, a remote terminal, a mobile device, a user terminal, a terminal device, a wireless communication device, a user agent, a user apparatus, a handheld terminal, a notebook computer, a cellular phone, a smartphone, a tablet computer, a handheld device, an augmented reality (augmented reality, AR) device, a virtual reality (virtual reality, VR) device, a machine-type communication terminal, or another device that can access a network. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved public land mobile network (public land mobile network, PLMN), a communication module carried on an unmanned aerial vehicle, or the like. This is not limited in this application.

The relay device may be configured to provide a relay service for the terminal. It should be noted that the relay device mentioned in this application may be the terminal mentioned above, or may be another device having a relay function. This is not limited.

For example, in internet of vehicles communication, the vehicle-mounted device (for example, a communication module on a vehicle) may communicate with an access network device by using a roadside unit (road side unit, RSU), that is, the roadside unit provides a relay service for the vehicle-mounted device. In this case, the roadside unit is a relay device, and the vehicle-mounted device is a terminal (which may also be referred to as a remote terminal).

In this application, mutual communication between the terminal and the access network device may be performed by using a specific air interface technology (for example, an NR or LTE technology). Similarly, mutual communication between the terminals, mutual communication between the terminal and the relay device, mutual communication between the relay device and the access network device, and mutual communication between the relay devices may all be performed by using the specific air interface technology (for example, the NR or LTE technology). Certainly, the air interface technology may alternatively be a communication technology other than the NR and LTE technologies.

In this embodiment of this application, the terminal or the relay device may include a processor and a memory. The memory is configured to store program code, and the processor is configured to execute the program code stored in the memory, so that the terminal or the relay device implements the methods in embodiments of this application.

The processor may be a central processing unit (central processing unit, CPU), and the memory may be a memory (also referred to as main storage), or the like. Further, the terminal or the relay device may further include a memory management unit (memory management unit, MMU). The terminal or the relay device may further include an operating system running on the processor, the memory, or the memory management unit, and an application layer running on the operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal or a functional module that is in the terminal and that can invoke and execute the program.

In addition, aspects or features of this application may be implemented as a method, an apparatus, or a product that uses standard programming and/or engineering technologies. For example, the computer-readable storage medium is configured to store program code, and the program code may be used to implement the method in embodiments of this application. Specifically, the computer-readable storage medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), or a smart card and a flash memory device (for example, an erasable programmable read-only memory (erasable programmable read-only memory, EPROM), a card, a stick, or a key drive).

In addition, various storage media described in this specification may represent one or more devices and/or other machine-readable storage media that are configured to store information.

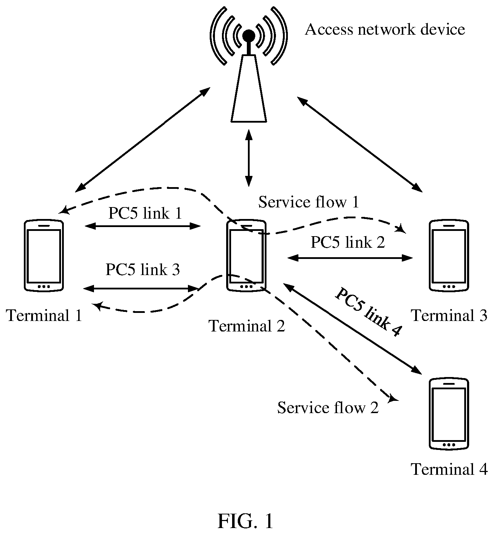

FIG. 1 is a schematic diagram of a network architecture to which an embodiment of this application is applicable. The network architecture may be used for communication between two terminals. The network architecture may be referred to as a D2D communication network architecture. Specifically, the network architecture includes: an access network device, and a terminal 1 to a terminal 4. The network architecture may be applied to a 4G communication system, or may be applied to a 5G communication system. It is clearly that the network architecture may also be applied to a subsequent communication system.

The access network device is a device that is in a network and that is configured to connect the terminal device to a wireless network. The access network device may be a node in a radio access network, may also be referred to as a base station, or may be referred to as a radio access network (radio access network, RAN) node (or device). The network device may include an evolved NodeB (NodeB, eNB or e-NodeB, evolutional NodeB) in a long term evolution (long term evolution) system or an LTE-advanced (LTE-Advanced, LTE-A) system, for example, a conventional macro eNB (eNB) and a micro eNB (eNB) in a heterogeneous network scenario. Alternatively, the network device may include a next generation NodeB (next generation NodeB, gNB) in a fifth generation mobile communication technology (5th generation, 5G) new radio (new radio, NR) system; or may include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB, or a home NodeB, HNB), a baseband unit (base band unit, BBU), a baseband pool BBU pool, a Wi-Fi access point (access point, AP), or the like; or may include a central unit (centralized unit, CU) and a distributed unit (distributed unit, DU) in a cloud radio access network (cloud radio access network, Cloud RAN) system. This is not limited in this embodiment of this application.

For the terminal 1 to the terminal 4, refer to the foregoing description of the terminal. Details are not described herein again.

It can be learned from the foregoing network architecture that when a distance between two terminals in 5G D2D communication is long, a relay device may be used for assistance. The relay device may also be referred to as relay user equipment (relay UE). For example, as shown in FIG. 1, D2D communication between the terminal 1 and the terminal 3 is assisted by using the terminal 2, that is, the terminal 2 is a relay device between the terminal 1 and the terminal 3. D2D communication between the terminal 1 and the terminal 4 is assisted by using the terminal 2, that is, the terminal 2 is a relay device between the terminal 1 and the terminal 4.

The communication between the terminal 1 and the terminal 2 and the communication between the terminal 2 and the terminal 3 may be performed through an interface. The interface may be used for information transmission on a data plane and a control plane. The interface may be a PC5 (proximity communication 5, proximity communication 5) interface or a sidelink (sidelink) interface. For ease of description, the PC5 interface is used as an example below.

It should be noted that there may be more relay devices between the terminal 1 and the terminal 3. There may also be more relay devices between the terminal 1 and the terminal 4.

In the network architecture shown in FIG. 1, when the terminal 1 and the terminal 3 communicate by using the terminal 2, a PCS link is established between the terminal 1 and the terminal 2, and is denoted as a PC5 link 1. A PC5 link is established between the terminal 2 and the terminal 3, and is denoted as a PC5 link 2. After the terminal 2 has established the PC5 link between the terminal 2 and the terminal 1, and the PC5 link between the terminal 2 and the terminal 3, the terminal 2 maintains a mapping relationship between the PC5 link 1 and the PCS link 2. The terminal 2 can forward, through the PC5 link 2, data received from the PC5 link 1 to the terminal 3, and can send, through the PCS link 1, data received from the PCS link 2 to the terminal 1, and the PCS link 1 and the PC5 link 2 are only used to transmit the data between the terminal 1 and the terminal 3.

It should be noted that, when the terminal 1 and the terminal 4 communicate by using the terminal 2, a new PCS link is established between the terminal 1 and the terminal 2, and is denoted as a PC5 link 3. A new PC5 link is established between the terminal 2 and the terminal 4, and is denoted as a PC5 link 4. The terminal 2 can transmit data between the terminal 1 and the terminal 4 according to a correspondence between the PCS link 3 and the PCS link 4.

In other words, when the terminal 1 communicates with different target UEs (Target UE) by using the terminal 2, different PC5 links need to be established between the terminal 1 and the terminal 2. In addition, states of the different PCS links further need to be maintained between the terminal 1 and the terminal 2, resulting in high signaling overheads.

Communication between the terminal 1 and the terminal 3 is denoted as a service flow 1, and communication between the terminal 1 and the terminal 4 is denoted as a service flow 2. The service flow 1 between the terminal 1 and the terminal 3 and the service flow 2 between the terminal 1 and the terminal 4 are relay flows, that is, the relay flow refers to a service flow for communication between the terminals.

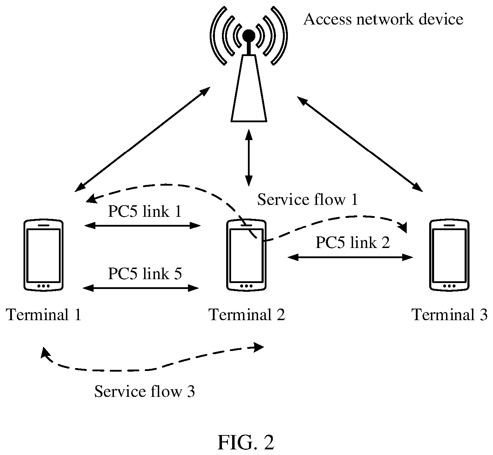

FIG. 2 uses the same network architecture as FIG. 1. In FIG. 2, when a terminal 1 communicates with a terminal 2, a PC5 link is established between the terminal 1 and the terminal 2, and is denoted as a PC5 link 5. Communication between the terminal 1 and the terminal 2 is denoted as a service flow 3. The service flow 3 is a non-relay flow, that is, the non-relay flow refers to a service flow for communication between the terminal and a relay device.

In FIG. 2, there already is a PC5 link 1 between the terminal 1 and the terminal 2, and a new PC5 link 5 needs to be established for communication between the terminal 1 and the terminal 2. States of different PCS links need to be maintained between the terminal 1 and the terminal 2, resulting in high signaling overheads.

For the foregoing problem, this application provides a communication method. In a relay scenario, this method can support reusing transmission of a relay flow and a non-relay flow on a same PCS link, reusing of a PC5 link between the relay device and a source terminal when there are a plurality of target terminals, and reusing of a PCS link between the relay device and a target terminal when there are a plurality of source terminals, thereby resolving a problem of high signaling overheads for maintaining a plurality of PCS links.

The technical solutions of this application may be applied to a scenario in which M source terminals communicate with N target terminals by using one relay device, where both M and N are positive integers greater than or equal to 1.

It should be noted that there may be a plurality of application scenarios in which the M source terminals communicate with the N target terminals by using one relay device. For example, the M source terminals send data to the N target terminals by using one relay device. For another example, the N target terminals send data to the M source terminals by using one relay device.

The source terminal may also be referred to as source remote user equipment (source remote UE). The target terminal may also be referred to as target remote user equipment (target remote UE), or may also be referred to as destination remote user equipment (destination remote UE). The relay device may also be referred to as a user equipment-to-user equipment relay device (UE-to-UE relay UE).

In this embodiment of this application, the first terminal may be a source terminal, and the second terminal may be a target terminal. In addition, for ease of description, an example in which a first transmission link is a first PCS link and a second transmission link is a second PCS link is used for description.

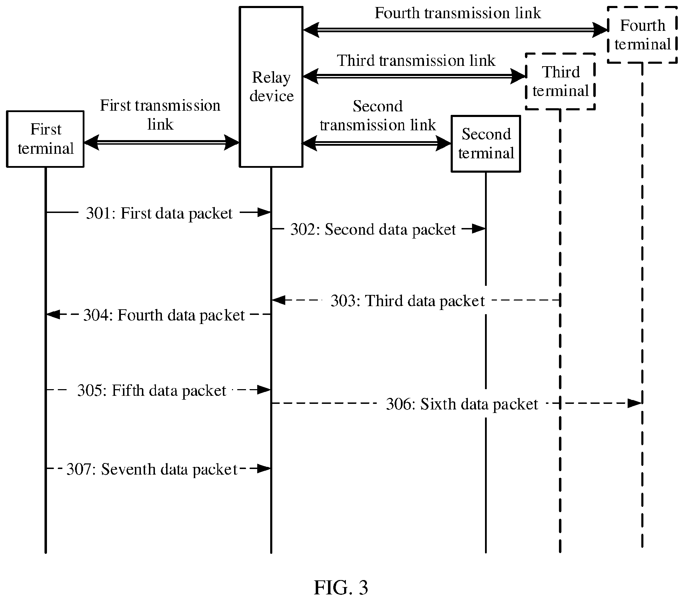

The following describes the technical solutions of this application in detail by using FIG. 3 to FIG. 10.

FIG. 3 is a schematic flowchart of a communication method according to this application. The method shown in FIG. 3 is performed by a relay device. The method shown in FIG. 3 may include at least a part of the following content.

301: The relay device receives a first data packet from a first terminal through a first PC5 link.

The first PC5 link may be a PCS link between the relay device and the first terminal.

It should be understood that, different from cases in FIG. 1 and FIG. 2, the first PC5 link may be used by the first terminal to communicate with at least two terminals, and the at least two terminals may include a second terminal. In addition, the at least two terminals may also include the relay device.

In other words, the first PC5 link may be a reusing link used for communication between a plurality of terminals and the first terminal. In other words, a same first PC5 link may be used for communication between the first terminal and the plurality of terminals. For example, the first PC5 link may be used by the first terminal to communicate with the second terminal by using the relay device. For another example, the first PC5 link may be further used by the first terminal to communicate with a terminal other than the second terminal by using the relay device. The terminal other than the second terminal may be the relay device (in this case, the first PCS link may carry a non-relay flow between the first terminal and the relay device, and a relay flow that passes through the relay device between the first terminal and the second terminal), and may alternatively be a terminal other than the second terminal and the relay device (assuming that the terminal is another terminal, in this case, the first PC5 link may carry a relay flow that passes through the relay device between the first terminal and the second terminal, and another relay flow that passes through the relay device between the first terminal and the another terminal).

The first data packet from the first terminal may include an identifier of the second terminal and data to be sent to the second terminal. In this way, the relay device can identify, based on the identifier of the second terminal in the first data packet, that the first data packet belongs to a relay flow that needs to be forwarded to the second terminal. The identifier of the second terminal may be used to identify the second terminal. Specifically, the relay device may identify, by using the identifier, that a target terminal of the first data packet is the second terminal. A specific form of the identifier of the second terminal is not limited in this application. For example, the identifier of the second terminal may be a layer 2 identifier of the second terminal, a temporary identifier allocated by the relay device to the second terminal, an application layer identifier of the second terminal, a temporary identifier allocated by the first terminal to the second terminal, or another identifier that can identify the second terminal.

It should be noted that the identifier of the second terminal included in the first data packet may be an identifier allocated by the relay device, or an identifier allocated by the first terminal to the second terminal.

In an example, when the identifier of the second terminal is not allocated by the first terminal, the relay device may send the identifier of the second terminal to the first terminal, where the identifier of the second terminal may be a layer 2 identifier of the second terminal. Alternatively, the identifier of the second terminal may be a temporary identifier allocated by the relay device to the second terminal. A message that carries the identifier of the second terminal is not limited in this application. For example, the identifier of the second terminal may be carried in a link modification request message or a direct communication accept message that is sent by the relay device to the first terminal.

In another example, when the identifier of the second terminal may be allocated by the first terminal, the first terminal may send the identifier of the second terminal to the relay device. A message that carries the identifier of the second terminal is not limited in this application. For example, the identifier of the second terminal may be carried in a direct communication request message or a link modification request message sent by the first terminal to the relay device. In this case, the relay device receives the identifier of the second terminal sent by the first terminal. The identifier of the second terminal may be a temporary identifier allocated by the first terminal to the second terminal.

In some embodiments, the first data packet may further include a layer 2 identifier of the relay device corresponding to the first PCS link. In this way, the relay device can determine, based on the layer 2 identifier of the relay device in the first data packet, to receive the first data packet. The layer 2 identifier of the relay device corresponding to the first PC5 link may be a layer 2 identifier allocated by the relay device to the first PC5 link or a layer 2 identifier used by the relay device on the first PC5 link.

302: The relay device sends a second data packet to the second terminal through a second PCS link based on the identifier of the second terminal.

The second data packet may include the data to be sent to the second terminal.

The second PCS link may be a PC5 link between the relay device and the second terminal.

In the foregoing technical solution, when sending data packets to different target terminals (for example, the second terminal and the foregoing another terminal) by using a same relay device, the first terminal may reuse a same transmission link (for example, the first PC5 link) between the first terminal and the relay device, to save transmission resources and reduce signaling overheads caused by maintaining the transmission link. Further, the relay device can identify a target terminal of a data packet based on an identifier of the target terminal in the data packet, so that the first terminal and the relay device send data to different target terminals through the same transmission link. For example, the first terminal may send the data to the different target terminals through the first PC5 link between the first terminal and the relay device, thereby reducing a quantity of PC5 links, and reducing overheads for maintaining the PCS link.

The reusing of the transmission link may mean that data packets sent to different target terminals or data packets from different target terminals are transmitted on the transmission link in a period of time.

Optionally, in an implementation scenario of the foregoing embodiment, when step 302 is performed, the relay device obtains identification information of the second PC5 link based on the identifier of the second terminal and a correspondence. In addition, the relay device sends the second data packet to the second terminal through the second PCS link based on the identification information of the second PC5 link.

The correspondence may be a correspondence between the identifier of the second terminal and the identification information of the second PC5 link. Alternatively, the correspondence may be a correspondence between the identifier of the second terminal, the layer 2 identifier of the relay device, and the identification information of the second PCS link.

The identification information of the second PC5 link may be the layer 2 identifier of the second terminal corresponding to the second PCS link.

The layer 2 identifier of the second terminal corresponding to the second PC5 link may be understood as a layer 2 identifier allocated by the second terminal to the second PCS link or a layer 2 identifier used by the second terminal on the second PCS link.

Specifically, that the relay device obtains the identification information of the second PC5 link based on the identifier of the second terminal and the correspondence may be implemented by an AS layer (access stratum layer, access stratum layer) of the relay device, that is, the AS layer of the relay device obtains the identification information of the second PCS link based on the identifier of the second terminal and the correspondence.

In an example, a ProSe (proximity-based service, proximity-based service) layer of the relay device may provide the identifier of the second terminal and the identification information of the second PCS link for the AS layer of the relay device.

The AS layer of the relay device establishes a correspondence between the identifier of the second terminal and the identification information of the second PCS link. The AS layer of the relay device may obtain the identification information of the second PCS link based on the identifier of the second terminal and the correspondence.

In another example, the ProSe layer of the relay device may send the identifier of the second terminal, the layer 2 identifier of the relay device, and the identification information of the second PCS link for the AS layer of the first relay device.

The AS layer of the relay device may establish a correspondence between the identifier of the second terminal, the layer 2 identifier of the relay device, and the identification information of the second PCS link. The AS layer of the relay device may obtain the identification information of the second PCS link based on the identifier of the second terminal and the correspondence.

Optionally, in another implementation scenario of the foregoing embodiment, the method in FIG. 3 may further include some or all of optional steps 303 to 307.

In one implementation scenario, the at least two communication devices further include a third terminal, and the method further includes content related to steps 303 and 304 described below. In addition, for ease of description, an example in which a third transmission link is a third PC5 link is used for description.

303: The relay device receives a third data packet from the third terminal through the third PC5 link.

The third data packet includes an identifier of the first terminal and data to be sent to the first terminal.

The third PC5 link is a PC5 link between the relay device and the third terminal.

It should be understood that the identifier of the first terminal may be used to identify the first terminal. Specifically, the relay device may identify, by using the identifier, that a target terminal of the third data packet is the first terminal.

The identifier of the first terminal may be a layer 2 identifier of the first terminal, may be a temporary identifier allocated by the relay device to the first terminal, may be an application layer identifier of the first terminal, or may be a temporary identifier allocated by the third terminal to the first terminal.

304: The relay device sends a fourth data packet to the first terminal through the first PC5 link based on the identifier of the first terminal. For a manner of sending the fourth data packet by the relay device, refer to the manner of sending the second data packet in step 302. Details are not described herein again.

The fourth data packet includes the data to be sent to the first terminal.

In this way, the relay device may forward not only a data flow sent by the first terminal, but also a data flow sent to the first terminal. In addition, different data flows may reuse a same first PC5 link, thereby saving transmission resources, and reducing signaling overheads caused by maintaining the transmission link.

Optionally, in another implementation scenario of the foregoing embodiment, the at least two communication devices further include a fourth terminal, and the foregoing method further includes content related to steps 305 and 306 described below. In addition, for ease of description, an example in which a fourth transmission link is a fourth PCS link is used for description.

305: The relay device receives a fifth data packet from the first terminal through the first PCS link.

The fifth data packet includes an identifier of the fourth terminal and data to be sent to the fourth terminal.

It should be understood that the identifier of the fourth terminal may be used to identify the fourth terminal. Specifically, the relay device may identify, by using the identifier, that a target terminal of the fifth data packet is the fourth terminal.

The identifier of the fourth terminal may be a layer 2 identifier of the fourth terminal, may be a temporary identifier allocated by the relay device to the fourth terminal, may be an application layer identifier of the fourth terminal, or may be a temporary identifier allocated by the fourth terminal to the first terminal.

306: The relay device sends a sixth data packet to the fourth terminal through the fourth PC5 link based on the identifier of the fourth terminal. For a manner of sending the sixth data packet by the relay device, refer to the manner of sending the second data packet in step 302. Details are not described herein again.

The sixth data packet includes the data to be sent to the fourth terminal.

The fourth PC5 link is a PC5 link between the relay device and the fourth terminal.

When sending data packets to different target terminals (for example, the second terminal and the foregoing another terminal) by using a same relay device, the first terminal may reuse a same transmission link (for example, the first PC5 link) between the first terminal and the relay device, to save transmission resources and reduce signaling overheads caused by maintaining the transmission link. Further, the relay device can identify a target terminal of a data packet based on an identifier of the target terminal in the data packet, so that the first terminal and the relay device send data to different target terminals through the same transmission link.

Optionally, in another implementation scenario of the foregoing embodiment, the at least two communication devices further include the relay device, and the foregoing method further includes step 307.

307: The relay device receives a seventh data packet from the first terminal through the first PC5 link.

If the seventh data packet does not include an identifier of any terminal, or the seventh data packet includes an identifier of the relay device, the relay device obtains data in the seventh data packet. In other words, the seventh data packet belongs to a non-relay flow between the first terminal and the relay device.

It should be understood that the identifier of the relay device is used to identify the relay device. Specifically, the relay device may identify, by using the identifier, that a target terminal of the seventh data packet is the relay device.

The identifier of the relay device may be a layer 2 identifier of the relay device, may be an application layer identifier of the relay device, may be a temporary identifier allocated by the relay device to the relay device, or may be a temporary identifier allocated by the first terminal to the relay device.

In this embodiment of this application, the relay device can determine, based on whether the data packet includes the identifier of the terminal, whether the target terminal of the data packet sent by the first terminal on the reused first PCS link is the relay device.

In this way, a relay flow and the non-relay flow between the first terminal and the relay device may reuse a same transmission link (for example, the first PCS link) between the first terminal and the relay device, to save transmission resources and reduce signaling overheads caused by maintaining the transmission link. Further, the relay device can identify a target terminal of a data packet based on an identifier of the target terminal in the data packet, so that the first terminal and the relay device send data to different target terminals through the same transmission link.

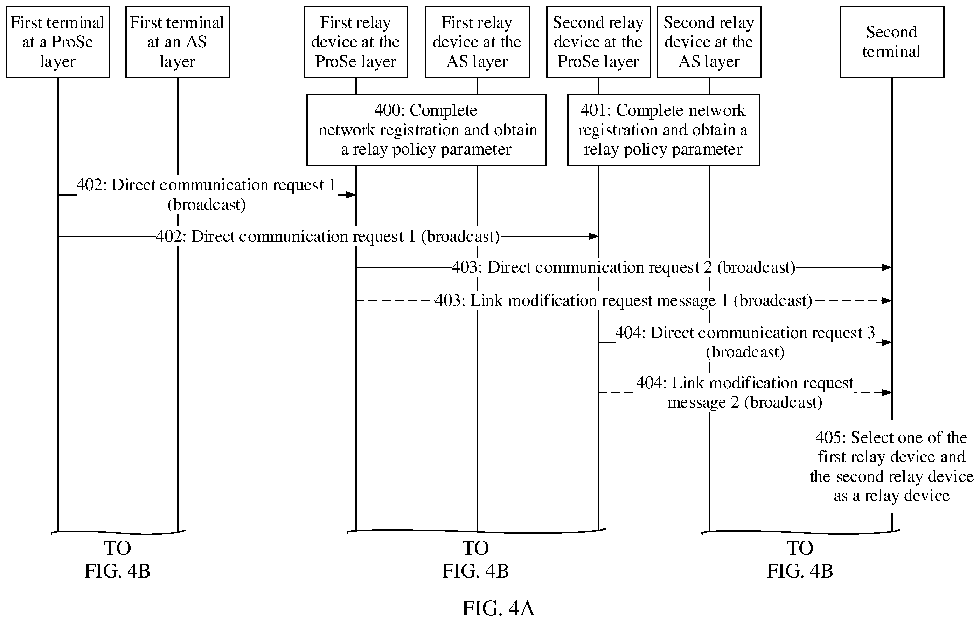

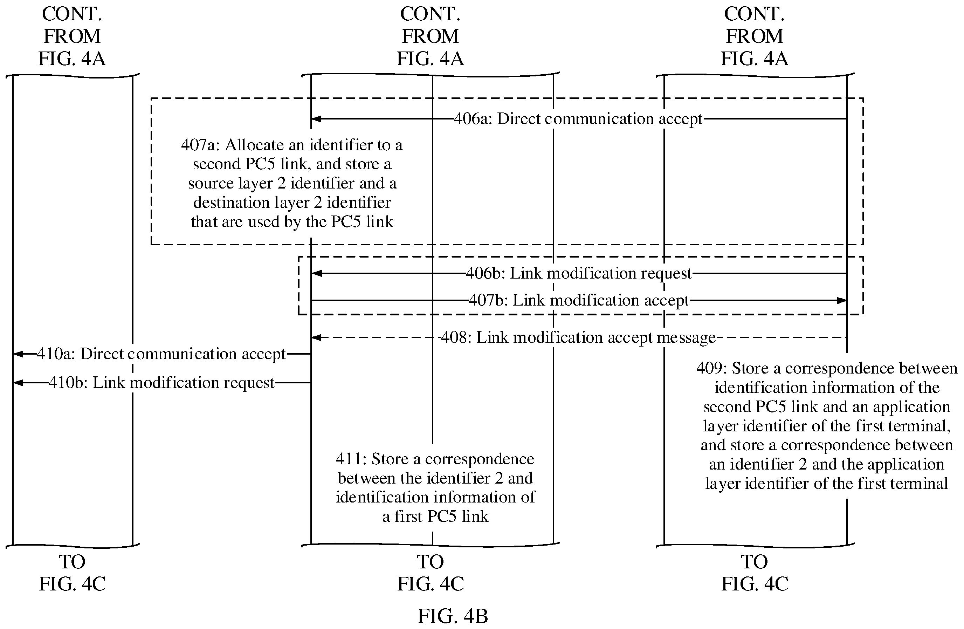

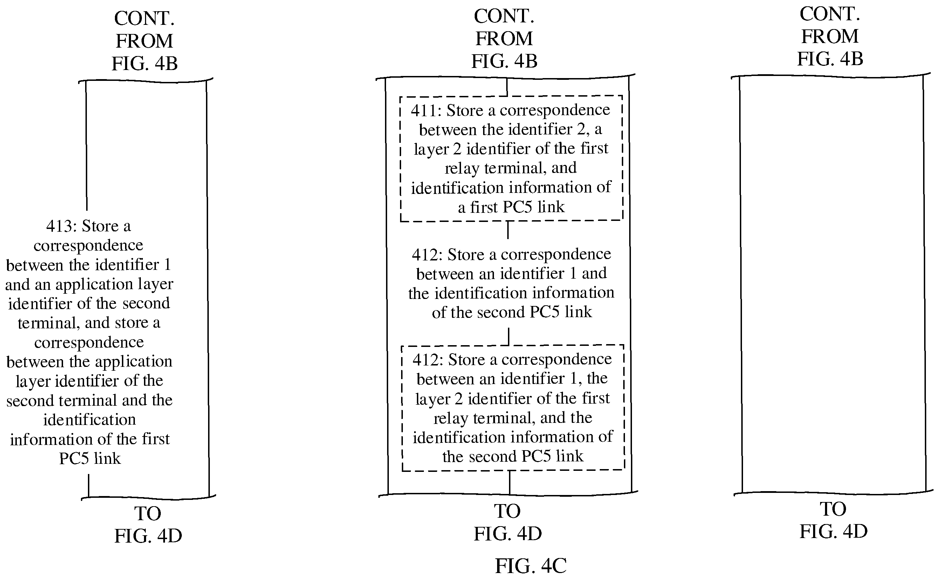

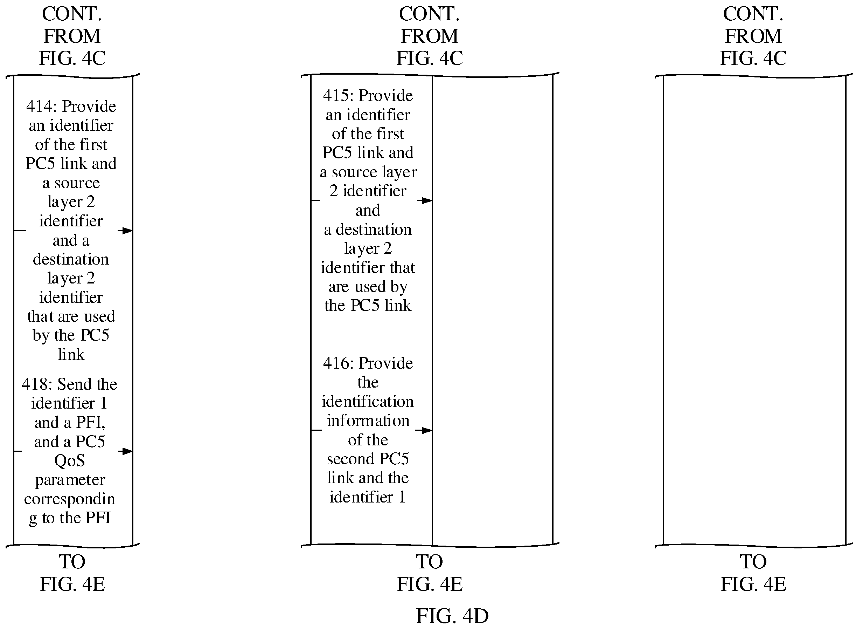

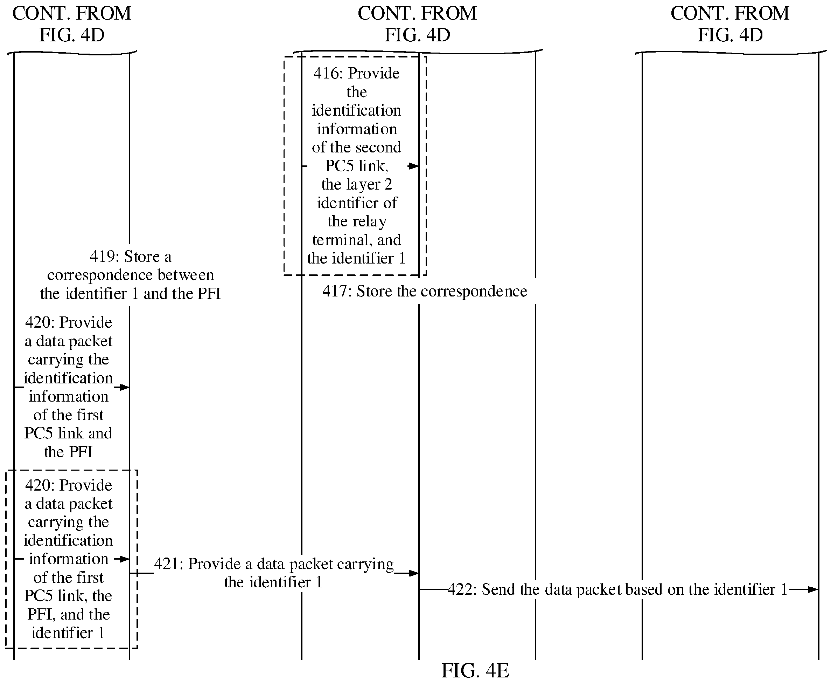

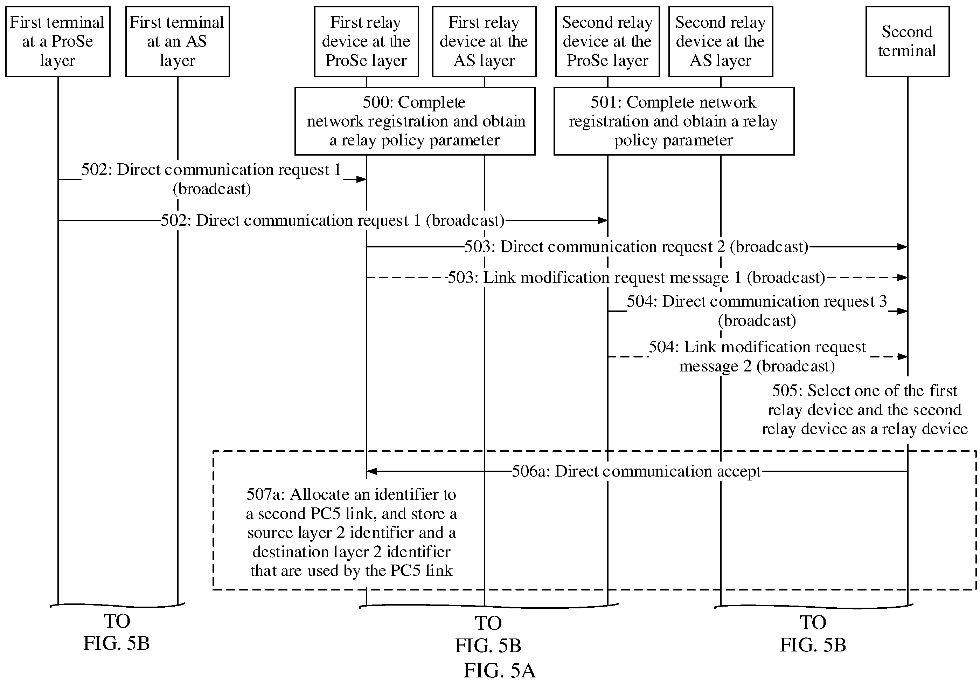

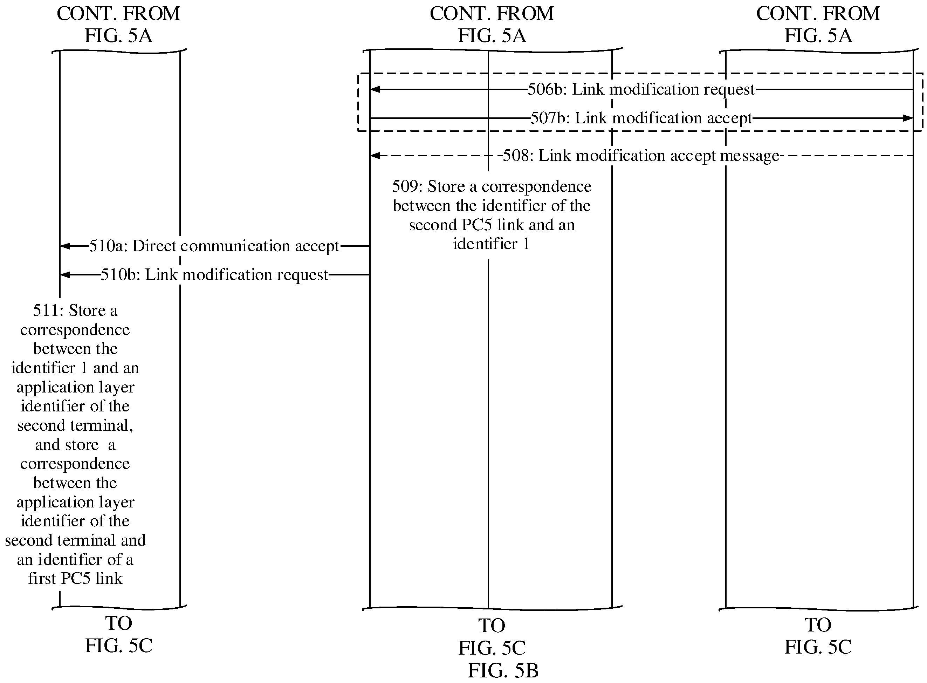

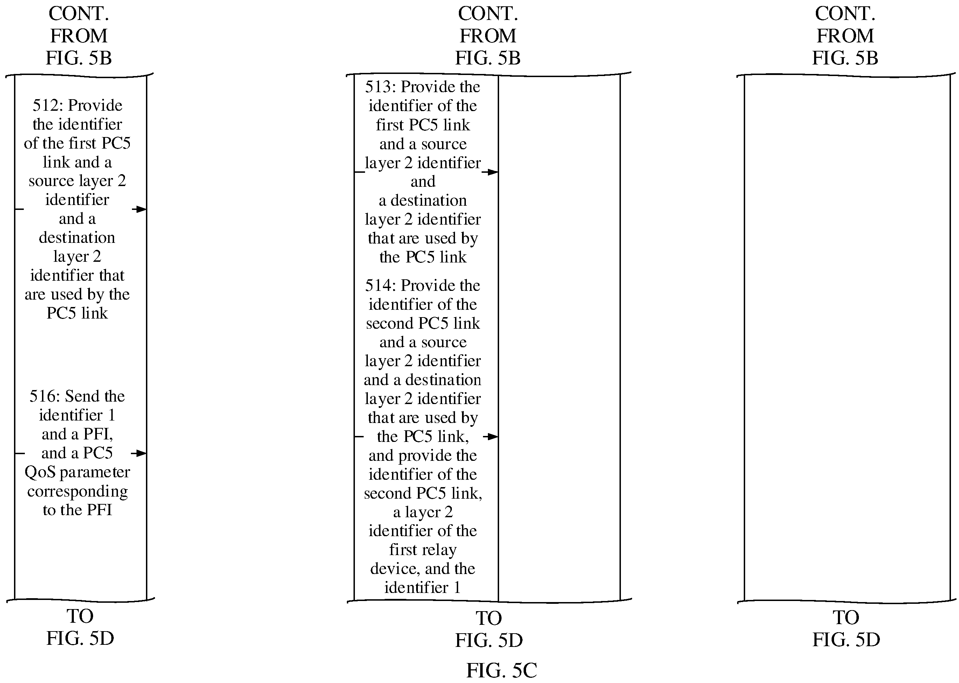

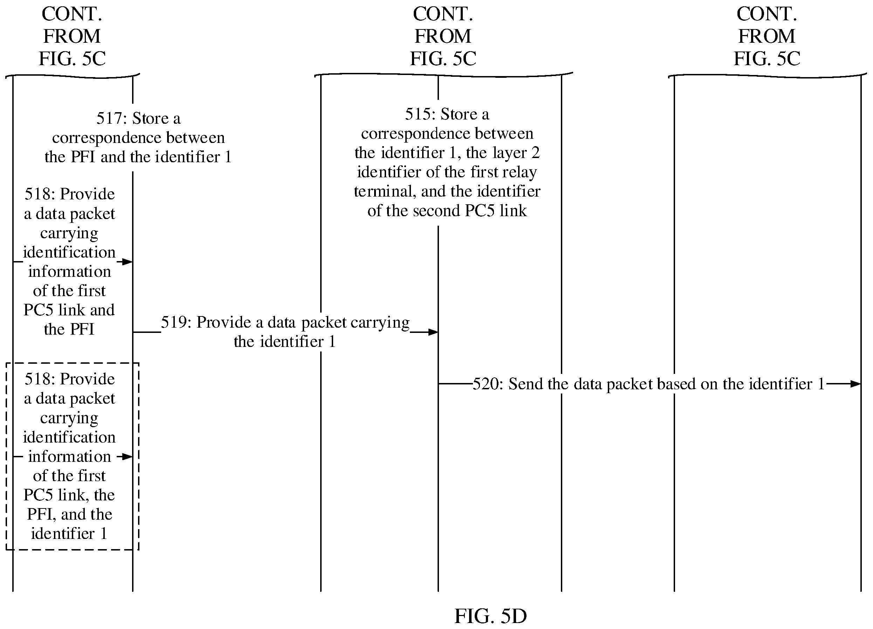

In this embodiment of this application, the relay device sends the identifier of the second terminal to the first terminal, and the relay device sends the identifier of the first terminal to the second terminal. Alternatively, the first terminal sends the identifier of the second terminal to the relay device, and the second terminal sends the identifier of the first terminal to the relay device. The following describes the two cases in detail with reference to FIG. 4A, FIG. 4B, FIG. 4C, FIG. 4D, and FIG. 4E and FIG. 5A, FIG. 5B, FIG. 5C, and FIG. 5D.

FIG. 4A, FIG. 4B, FIG. 4C, FIG. 4D, and FIG. 4E are a schematic flowchart of another communication method according to this application. FIG. 4A, FIG. 4B, FIG. 4C, FIG. 4D, and FIG. 4E describe a case in which the identifier of the second terminal is sent by the relay device to the first terminal, and the identifier of the first terminal is sent by the relay device to the second terminal.

It should be understood that in the method shown in FIG. 4A, FIG. 4B, FIG. 4C, FIG. 4D, and FIG. 4E, the first terminal and the second terminal may communicate with each other by using N relay devices.

N is a positive integer greater than or equal to 1. For ease of description, FIG. 4A, FIG. 4B, FIG. 4C, FIG. 4D, and FIG. 4E show only a case in which there are two relay devices, that is, a first relay device and a second relay device. The first relay device and the second relay device are collectively referred to as relay devices. The method shown in FIG. 4A, FIG. 4B, FIG. 4C, FIG. 4D, and FIG. 4E may include at least a part of the following content.

400: The first relay device completes network registration and obtains a relay policy parameter.

Specifically, the first relay device indicates a relay capability when registering with a network, and the network side delivers the relay policy parameter based on the relay capability.

The relay policy parameter may include at least one of the following: a public land mobile network (public land mobile network, PLMN) that allows the first relay device to relay data, or a service for which the first relay device allows relay.

401: The second relay device completes network registration and obtains a relay policy parameter. A specific step is the same as step 400. Details are not described herein again.

402: The first terminal separately sends a direct communication request (direct communication request, DCR) message to the first relay device and the second relay device.

The direct communication request message is used by the first terminal to request to communicate with the second terminal.

The direct communication request message may include an application layer identifier of the first terminal and an application layer identifier of the second terminal.

The application layer identifier of the first terminal may be an identifier used in a specific application of the first terminal. For example, the application layer identifier of the first terminal may be a WeChat name used in WeChat in the first terminal.

Similarly, the application layer identifier of the second terminal may also be an identifier used in a specific application of the second terminal.

Specifically, the first terminal may send the direct communication request message in a broadcast manner, which is denoted as a direct communication request message 1. Correspondingly, the first relay device receives the direct communication request message 1, and the second relay device receives the direct communication request message 1.

403: When the application layer identifier of the second terminal in the direct communication request message 1 is inconsistent with an application layer identifier of the first relay device, and when the first relay device determines that there is no PCS link between the first relay device and the second terminal, the first relay device allows, based on the relay policy parameter, the relay service to send a direct communication request message to the second terminal, which is denoted as a direct communication request message 2.

The direct communication request message 2 may include an identifier of the first terminal, which is denoted as an identifier 2.

The identifier of the first terminal may be an application layer identifier of the first terminal. Alternatively, the identifier of the first terminal is a temporary identifier allocated by the first relay device to the first terminal, or a layer 2 identifier of the first terminal.

When the identifier of the first terminal is the application layer identifier of the first terminal, the direct communication request message 2 may further include an application layer identifier of the second terminal and an application layer identifier of the first relay device.

When the identifier of the first terminal is not the application layer identifier of the first terminal, the direct communication request message 2 may further include an application layer identifier of the first terminal, an application layer identifier of the second terminal, and an application layer identifier of the first relay device.

Specifically, the first relay device may send the direct communication request message 2 in a broadcast manner. Correspondingly, the second terminal receives the direct communication request message 2.

404: When the application layer identifier of the second terminal in the direct communication request message 1 is inconsistent with an application layer identifier of the second relay device, and when the second relay device determines that there is no PC5 link between the second relay device and the second terminal, the second relay device allows, based on the relay policy parameter, the relay service to send a direct communication request message to the second terminal, which is denoted as a direct communication request message 3.

The direct communication request message 3 may include an identifier of the first terminal, which is denoted as an identifier 3.

The identifier of the first terminal may be an application layer identifier of the first terminal. Alternatively, the identifier of the first terminal is a temporary identifier allocated by the first relay device to the first terminal, or a layer 2 identifier of the first terminal.

When the identifier of the first terminal is the application layer identifier of the first terminal, the direct communication request message 2 may further include an application layer identifier of the second terminal and an application layer identifier of the first relay device.

When the identifier of the first terminal is not the application layer identifier of the first terminal, the direct communication request message 2 may further include an application layer identifier of the first terminal, an application layer identifier of the second terminal, and an application layer identifier of the first relay device.

Specifically, the first relay device may send the direct communication request message 3 in a broadcast manner. Correspondingly, the second terminal receives the direct communication request message 3.

405: The second terminal selects one relay device from the first relay device and the second relay device as the relay device used by the second terminal to communicate with the first terminal. A manner of selecting the relay device is in the conventional technology. Details are not described herein again.

For ease of description, an example in which the second terminal selects the first relay device to communicate with the first terminal is used for description.

After the second terminal selects the first relay device to communicate with the first terminal, the second terminal determines whether there is a PC5 link between the second terminal and the first relay device.

A specific determining manner may be as follows: The second terminal may determine, based on whether an overview of an established PCS link includes the application layer identifier of the first relay device, whether there is the PCS link between the second terminal and the first relay device. If the overview of the PC5 link includes the application layer identifier of the first relay device, there is the PC5 link between the second terminal and the first relay device. If the overview of the PCS link does not include the application layer identifier of the first relay device, there is no PC5 link between the second terminal and the first relay device.

Specifically, there are two cases in which the second terminal determines whether there is the PC5 link between the second terminal and the first relay device.

Case 1: There is no PCS link between the second terminal and the first relay device, and steps 406a and 407a are performed.

406a: After receiving the direct communication request message 2 sent by the first relay device, the second terminal sends a direct communication accept (direct communication accept, DCA) message to the first relay device.

After the first relay device receives the direct communication accept message sent by the second terminal, that is, the first relay device learns that the second terminal communicates with the first terminal by using the first relay device.

After receiving the direct communication accept message sent by the second terminal, the first relay device completes establishment of a link between the first relay device and the second terminal. For ease of description, the link between the first relay device and the second terminal is referred to as a second PCS link.

It should be understood that the second PC5 link is a newly established PC5 link between the first relay device and the second terminal, and the second PCS link is used by the second terminal to communicate with the first terminal by using the first relay device.

407a: The first relay device may allocate an identifier of the second PCS link to the second PC5 link, and store a source layer 2 identifier and a destination layer 2 identifier that are used by the PCS link.

It should be understood that the source layer 2 identifier herein is a layer 2 identifier of the first relay device, and the destination layer 2 identifier is a layer 2 identifier of the second terminal.

Case 2: If there already is a second PCS link between the first relay device and the second terminal, 406b and 407b are performed.

406b: After receiving the direct communication request message 2 sent by the first relay device, the second terminal sends a link modification request (link modification request) message to the first relay device.

After the first relay device receives the link modification request message sent by the second terminal, that is, the first relay device learns that the second terminal communicates with the first terminal by using the first relay device.

The link modification request message may include an application layer identifier of the first terminal.

The link modification request message indicates the first relay device to transmit data of the first terminal through the second PCS link.

The second PCS link is used for communication between the first relay device and the second terminal.

407b: The first relay device then sends a link modification accept message to the second terminal.

Optionally, in this embodiment of this application, after the second terminal receives a link modification request message 1 sent by the first relay device, and there already is the second PCS link between the first relay device and the second terminal, the second terminal sends the link modification accept message (link modification accept) to the first relay device, that is, step 408 is performed.

After steps 406a and 407a or steps 406b and 407b, if there already is the PC5 link between the first relay device and the second terminal, that is, the second PCS link, step 409 is performed. The second PCS link is used by the second terminal to communicate with the first terminal by using the first relay device.

409: The second terminal stores a correspondence between identification information of the second PC5 link and the application layer identifier of the first terminal, and the second terminal may determine, according to the correspondence, that the second terminal sends data to the first terminal through the second PCS link.

The second terminal further stores a correspondence between the identifier 2 and the application layer identifier of the first terminal. When the second terminal may send data to the first terminal according to the correspondence, the data packet may include the identifier 2.

After the first relay device receives the direct communication accept message (refer to step 406a) or the link modification request message (refer to step 406b) sent by the second terminal, the first relay device determines whether there is a PCS link between the first relay device and the first terminal.

A specific determining manner is the same as the manner in which the second terminal determines whether there already is the PC5 link between the second terminal and the first relay device. Details are not described herein again.

There are the following two cases in which whether there is the PCS link between the first relay device and the first terminal.

Case 1: There is no PC5 link between the first relay device and the first terminal, and step 410a is performed.

410a: The first relay device sends a direct communication accept message to the first terminal.

The direct communication accept message includes an identifier of the second terminal, which is denoted as an identifier 1.

The identifier of the second terminal may be a layer 2 identifier of the second terminal. Alternatively, the identifier of the second terminal may be a temporary identifier allocated by the first relay device to the second terminal. Alternatively, the identifier of the second terminal may be an application layer identifier of the second terminal.

After receiving the direct communication accept message sent by the first relay device, the first terminal completes establishment of a link between the first terminal and the first relay device. For ease of description, the PCS link is denoted as a first PC5 link.

It should be understood that the first PC5 link is a newly established PC5 link between the first relay device and the first terminal, and the first PCS link is used by the first terminal to communicate with the second terminal by using the first relay device.

Case 2: If there already is the PCS link between the first relay device and the first terminal, step 410b is performed.

410b: The first relay device sends a link modification request message to the first terminal.

The link modification request message includes an identifier 1.

The link modification request message indicates the first relay device to transmit data of the first terminal through the first PCS link.

The first PCS link is used by the first terminal to communicate with the second terminal by using the first relay device.

411: The first relay device stores a correspondence between the identifier 2 and identification information of the first PC5 link.

Specifically, the first relay device determines the correspondence between the identifier 2 and the identification information of the first PC5 link based on that the first terminal communicates with the second terminal through the first PCS link.

Optionally, the first relay device may store a correspondence between the identifier 2, the layer 2 identifier of the first relay device, and the identification information of the first PCS link.

The identification information of the first PC5 link may include the layer 2 identifier of the first terminal corresponding to the first PCS link.

412: The first relay device stores a correspondence between the identifier 1 and the identification information of the second PCS link.

Specifically, the first relay device determines the correspondence between the identifier 1 and the identification information of the second PC5 link based on that the second terminal communicates with the first terminal through the second PCS link.

Optionally, the first relay device may store a correspondence between the identifier 1, the layer 2 identifier of the first relay device, and the identification information of the second PCS link.

The identification information of the second PC5 link may include the layer 2 identifier of the second terminal corresponding to the second PCS link.

413: After the first terminal receives the direct communication accept message (refer to step 410a) or the link modification request message (refer to step 410b) sent by the first relay device, a ProSe layer of the first terminal stores a correspondence between the application layer identifier of the second terminal and the identifier 1. When the first terminal sends data to the second terminal according to the correspondence, the first terminal may include the identifier 1 in the sent data packet.

In addition, the first terminal also stores, at the ProSe layer, a correspondence between the application layer identifier of the second terminal and the identification information of the first PC5 link, and the first terminal determines, according to the correspondence, that the first terminal sends data to the second terminal through the first PCS link.

Optionally, in this embodiment of this application, when the second terminal determines that there is the PC5 link between the first relay device and the second terminal, and when the second relay device determines that the application layer identifier of the second terminal in the direct communication request message 1 is inconsistent with the application layer identifier of the second relay device, in step 404, the second relay device sends the link modification request message 2 to the second terminal. It should be understood that a specific determining manner in which the second relay device determines whether there is the PC5 link between the second relay device and the second terminal is the same as the manner in which the first relay device determines whether there is the PC5 link between the first relay device and the second terminal. Details are not described herein again.

The link modification request message 2 may include an identifier of the first terminal, which is denoted as an identifier 3.

The identifier of the first terminal may be an application layer identifier of the first terminal.

Specifically, when the identifier of the first terminal is the application layer identifier of the first terminal, the link modification request message 2 may further include an application layer identifier of the second terminal and an application layer identifier of the first relay device. Alternatively, when the identifier of the first terminal is not the application layer identifier of the first terminal, the link modification request message 2 may further include an application layer identifier of the first terminal, an application layer identifier of the second terminal, and an application layer identifier of the first relay device.

It should be understood that a specific determining manner in which the second relay device determines whether there is the PCS link between the second relay device and the second terminal is the same as the manner in which the first relay device determines whether there is the PC5 link between the first relay device and the second terminal. Details are not described herein again.

It should be understood that step 402 to step 413 include message interaction between the proximity-based service (ProSe) layer of the first terminal, a ProSe layer of the first relay device, and a ProSe layer of the second terminal, and information storage at a ProSe layer of each terminal.

After the interaction between the first terminal, the first relay device, and the second terminal in the connection establishment process is completed, interaction further exists between the ProSe layer and an AS layer inside the first terminal and the first relay device. Specific descriptions are described below.

When the first PC5 link is newly established between the first terminal and the first relay device, steps 414 and 415 shown in FIG. 4A, FIG. 4B, FIG. 4C, FIG. 4D, and FIG. 4E are performed.

414: The ProSe layer of the first terminal provides an identifier of the first PC5 link and a source layer 2 identifier and a destination layer 2 identifier that are used by the PCS link for the AS layer of the first terminal.

The source layer 2 identifier is a layer 2 identifier of the first terminal, and the destination layer 2 identifier is a layer 2 identifier of the first relay device.

It should be understood that if there already is the PC5 link between the first terminal and the first relay device, that is, the first PC5 link is reused, step 414 is not performed.

415: The ProSe layer of the first relay device provides an identifier of the first PC5 link and a source layer 2 identifier and a destination layer 2 identifier that are used by the PCS link for the AS layer of the first terminal.

The source layer 2 identifier herein is a layer 2 identifier of the first terminal, and the destination layer 2 identifier is a layer 2 identifier of the first relay device.

It should be understood that if there already is the PC5 link between the first terminal and the first relay device, that is, the first PC5 link is reused, step 415 is not performed.

416: The ProSe layer of the first relay device provides the identification information of the second PC5 link and the identifier 1 for the AS layer of the first relay device.

Optionally, the ProSe layer of the first relay device provides the identification information of the second PCS link, the layer 2 identifier of the first relay device, and the identifier 1 for the AS layer of the first relay device.

When the second PCS link is newly established between the second terminal and the first relay device, the ProSe layer of the first relay device further provides the identification information of the second PCS link and the source layer 2 identifier and the destination layer 2 identifier that are used by the PC5 link for the AS layer of the first relay device.

The source layer 2 identifier herein is a layer 2 identifier of the first relay device, and the destination layer 2 identifier is a layer 2 identifier of the second terminal.

417: The AS layer of the first relay device stores the correspondence between the identifier 1 and the identification information of the second PC5 link. Alternatively, the AS layer of the first relay device stores a correspondence between the identifier 1, the layer 2 identifier of the first relay device, and the identification information of the second PCS link.

When the second PCS link is newly established between the second terminal and the first relay device, the AS layer of the first relay device further stores a correspondence between the identifier of the second PCS link and the source layer 2 identifier and the destination layer 2 identifier that are used by the second PCS link.

418: The ProSe layer of the first terminal provides the identifier 1, a PC5 QoS flow identifier (PCS QoS flow identifier, PFI), and a PC5 QoS parameter corresponding to the PFI for the AS layer of the first terminal.

Specifically, the first terminal transmits data of the second terminal based on the QoS flow corresponding to the PFI, and provides the identifier 1 and the PFI for the AS layer of the first terminal. The first terminal determines, according to a QoS rule of the QoS flow, where the QoS rule includes the application layer identifier of the second terminal or the layer 2 identifier of the second terminal, that the QoS flow is used to transmit the data of the second terminal.

419: The AS layer of the first terminal stores a correspondence between the PFI and the identifier 1.

A process of performing data transmission after the PC5 link between the first terminal and the first relay device and the PCS link between the first relay device and the second terminal are established, as described below, includes step 420 to step 422.

420: The ProSe layer of the first terminal provides the identification information of the first PC5 link and the PFI along with the data packet for the AS layer of the first terminal.

Specifically, the ProSe layer of the first terminal receives the data packet from the application layer, and the ProSe layer of the first terminal provides the data packet for the AS layer of the first terminal.

Specifically, the ProSe layer of the first terminal determines an identifier of the first PC5 link corresponding to the application layer identifier of the second terminal. The first terminal determines the identifier of the first PC5 link according to a correspondence that is between the application layer identifier of the second terminal and the identifier of the first PCS link and that is stored at the ProSe layer.

In addition, the ProSe layer of the first terminal determines the PFI according to the QoS rule, where the QoS rule includes the application layer identifier of the second terminal or the layer 2 identifier of the second terminal.

Optionally, in some embodiments, the application layer carries the application layer identifier of the second terminal along with the data packet, and the first terminal may determine, based on the application layer identifier of the second terminal, that a target terminal of the data packet is the second terminal.

Optionally, in some other embodiments, the first terminal may receive a data packet sent through an inherent channel between the first terminal and the application layer, to determine that a target terminal of the data packet is the second terminal. The inherent channel is used only for communication between the first terminal and the second terminal.

Optionally, in this embodiment of this application, the ProSe layer of the first terminal receives the data packet from the application layer, and the ProSe layer of the first terminal sends the data packet to the AS layer of the first terminal. The identification information of the first PC5 link, the PFI, and the identifier 1 are also sent to the AS layer of the first terminal along with the data packet. Specifically, the first terminal determines the identifier 1 according to the correspondence, stored in step 413, between the application layer identifier of the second terminal and the identifier 1. Optionally, the application layer carries the application layer identifier of the second terminal along with the data packet.

421: The AS layer of the first terminal sends the data packet carrying the identifier 1.

Specifically, the AS layer of the first terminal may add information about the identifier 1 to a header of the sent data packet according to the correspondence between the PFI and the identifier 1 or based on the identifier 1 received along with the data packet.

The AS layer of the first terminal determines a source layer 2 identifier and a destination layer 2 identifier based on the identifier of the first PC5 link, where the source layer 2 identifier is a layer 2 identifier of the first terminal, and the destination layer 2 identifier is a layer 2 identifier of the first relay device, and adds the layer 2 identifier of the first terminal and the layer 2 identifier of the first relay device to the header of the data packet. The AS layer of the first terminal determines an AS layer configuration based on information about the PFI, and the AS layer uses the layer 2 identifier of the first terminal and the layer 2 identifier of the first relay device, and the AS layer configuration to send corresponding data.

It should be noted that the AS layer includes an RLC layer and a MAC layer, and may further include an adaptation layer. Specifically, the adaptation layer (Adaptation layer) may be introduced between the RLC layer (Radio Link Control layer) and the MAC layer (Multiple Access Control layer), and the adaptation layer adds information about the identifier 1 to the data packet.

The AS layer of the first terminal sends the data packet to the first relay device based on the layer 2 identifier of the first terminal and the layer 2 identifier of the first relay device, and the data packet carries the identifier 1.

In some embodiments, the ProSe layer of the first terminal does not need to send the correspondence between the PFI and the identifier 1 to the AS layer of the first terminal by using step 415, but when the ProSe layer of the first terminal sends the data packet to the AS layer of the first terminal, the identifier of the first PCS link, the PFI, and the identifier 1 are carried along with the data packet.

422: The first relay device forwards the data packet based on the identifier 1.

Specifically, the first relay device receives the data packet sent by the first terminal, and the first relay device sends a second data packet to the second terminal through the second PC5 link by using the identifier (the identifier 1) of the second terminal in the data packet.

In some embodiments, the first relay device may obtain the identification information of the second PC5 link according to a correspondence between the identifier 1 and the identifier of the second PCS link. The first relay device sends the second data packet to the second terminal through the second PCS link based on the identification information of the second PCS link.

In some other embodiments, the first relay device may obtain the identification information of the second PCS link according to a correspondence between the identifier 1, the layer 2 identifier of the first relay device, and the layer 2 identifier of the second terminal. The first relay device sends the second data packet to the second terminal through the second PCS link based on the identification information of the second PC5 link.

The first relay device replaces a layer 2 identifier of the data packet with the layer 2 identifier of the first relay device and the layer 2 identifier of the second terminal that correspond to the second PCS link.

In this embodiment of this application, the first relay device receives the data packet sent by the first terminal, and the AS layer of the first relay device determines whether the layer 2 identifier of the first relay device of the data packet is a layer 2 identifier allocated by the first relay device to the first relay device. If no, the first relay device discards the data packet; and if yes, the first relay device further needs to distinguish whether the received data packet from the first terminal is a data packet sent to the first relay device or a data packet that needs to be forwarded by the first relay device.

Specifically, the first relay device further needs to distinguish whether the received data packet from the first terminal is the data packet sent by the first terminal or the data packet that needs to be forwarded by the first relay device. There are the following two distinguishing manners.

Manner 1: Distinguish based on whether the data packet sent by the first terminal to the first relay device includes the information about the identifier 1.

Specifically, if a header of the data packet sent by the first terminal to the first relay device does not carry the identifier 1, the data packet is the data packet sent by the first terminal to the first relay device. If a header of the data packet sent by the first terminal to the first relay device carries the identifier 1, the data packet is the data packet sent by the first terminal to a terminal identified by the identifier 1.

Manner 2: The first relay device determines whether the identifier included in the data packet is the identifier of the first relay device.

The first relay device may send the identifier 3 of the first relay device when sending the identifier 1 of the second terminal to the first terminal (as shown in step 410a or 410b in FIG. 4A, FIG. 4B, FIG. 4C, FIG. 4D, and FIG. 4E). The identifier 3 may be included in the direct communication accept message or the link modification request message sent by the first relay device to the first terminal. Alternatively, in a process in which the first relay device establishes the first PCS link to the first terminal, the first relay device sends the identifier 3 of the first relay device to the first terminal.

Specifically, if the data packet sent by the first terminal to the first relay device includes information about the identifier 3, it indicates that a target terminal of the data packet is the first relay device. If the data packet sent by the first terminal to the first relay device does not include information about the identifier 3, it indicates that the data packet is a data packet that needs to be forwarded by the first relay device to another target terminal.

In the solution shown in FIG. 4A, FIG. 4B, FIG. 4C, FIG. 4D, and FIG. 4E, for ease of description, only one target terminal, that is, the second terminal, is used as an example for description. It should be understood that this solution can be further applied to a case in which there are N target terminals. This is not limited in this application.

In the solution shown in FIG. 4A, FIG. 4B, FIG. 4C, FIG. 4D, and FIG. 4E, when sending data to different target terminals by using the first relay device, the first terminal reuses the PCS link between the first terminal and the first relay device, thereby reducing a quantity of PC5 links that need to be established, reducing signaling overheads for maintaining the PCS link, and saving communication resources.

FIG. 5A, FIG. 5B, FIG. 5C, and FIG. 5D are a schematic flowchart of another communication method according to this application. FIG. 5A, FIG. 5B, FIG. 5C, and FIG. 5D describe a case in which the identifier of the second terminal is sent by the first terminal to the relay device, and the identifier of the first terminal is sent by the second terminal to the relay device.

It should be understood that in the method shown in FIG. 5A, FIG. 5B, FIG. 5C, and FIG. 5D, the first terminal and the second terminal may communicate with each other by using N relay devices.

N is a positive integer greater than or equal to 1. For ease of description, FIG. 5A, FIG. 5B, FIG. 5C, and FIG. 5D show only a case in which there are two relay devices, that is, a first relay device and a second relay device. The first relay device and the second relay device are collectively referred to as relay devices. The method shown in FIG. 5A, FIG. 5B, FIG. 5C, and FIG. 5D may include at least a part of the following content.

Step 500 and step 501 are the same as step 400 and step 401 in FIG. 4A, FIG. 4B, FIG. 4C, FIG. 4D, and FIG. 4E. Details are not described herein again.

502: The first terminal separately sends a direct communication request message to the first relay device and the second relay device.

The direct communication request message is used by the first terminal to request to communicate with the second terminal.

The direct communication request message may include an application layer identifier of the second terminal and an identifier of the second terminal, which is denoted as an identifier 1.

The identifier of the second terminal may be a layer 2 identifier of the second terminal, or a temporary identifier allocated by the first relay device to the second terminal.

Alternatively, the identifier of the second terminal may be the application layer identifier of the second terminal. In this case, the direct communication request message may further include only the application layer identifier of the second terminal.

Specifically, the first terminal may send the direct communication request message in a broadcast manner, which is denoted as a direct communication request message 1. Correspondingly, the first relay device receives the direct communication request message 1, and the second relay device receives the direct communication request message 1.

Steps 503 to 505 are the same as steps 403 to 405. Details are not described herein again.

In this embodiment of this application, the first relay device can detect uniqueness of the identifier of the second terminal.

A detection manner is specifically as follows: The first relay device stores an identifier of another terminal. It should be understood that the another terminal refers to a terminal that transmits relay data by using the first relay device. The first relay device compares the identifier of the second terminal with the identifier of the another terminal.

When detecting that the identifier of the second terminal is consistent with the identifier of the another terminal, the first relay device may indicate the first terminal to re-determine the identifier 1 for the second terminal, or the first relay device re-determines the identifier 1 for the second terminal.

The second terminal selects the first relay device to communicate with the first terminal. There are two cases in which the second terminal determines whether there is a PCS link between the second terminal and the first relay device.

Case 1: There is no PCS link between the first relay device and the second terminal, and steps 506a and 507a are performed.

Step 506a is similar to step 406a in FIG. 4A, FIG. 4B, FIG. 4C, FIG. 4D, and FIG. 4E, and a difference lies in that the direct communication accept message sent by the second terminal to the first relay device includes an identifier of the first terminal, which is denoted as an identifier 2, and the identifier 2 is used to distinguish data of different M first terminals.

Step 507a is the same as step 407a in FIG. 4A, FIG. 4B, FIG. 4C, FIG. 4D, and FIG. 4E. Details are not described herein again.

Case 2: If there already is the PC5 link between the first relay device and the second terminal, 506b and 507b are performed.

Step 506b is similar to step 406b in FIG. 4A, FIG. 4B, FIG. 4C, FIG. 4D, and FIG. 4E, and a difference lies in that the link modification request message sent by the second terminal to the first relay device includes the identifier of the first terminal.

Step 507b is the same as step 407b in FIG. 4A, FIG. 4B, FIG. 4C, FIG. 4D, and FIG. 4E. Details are not described herein again.

Step 508 is the same as step 408 in FIG. 4A, FIG. 4B, FIG. 4C, FIG. 4D, and FIG. 4E. Details are not described herein again.

After steps 506a and 507a or steps 506b and 507b, if there already is the PC5 link between the first relay device and the second terminal, that is, the second PCS link, step 509 is performed.

The second PCS link is used by the second terminal to communicate with the first terminal by using the first relay device.

509: The first relay device stores a correspondence between the identifier 1 and the identifier of the second PCS link.

After the first relay device receives the direct communication accept message (refer to step 506a) or the link modification request message (refer to step 506b) sent by the second terminal, the first relay device determines whether there is a PCS link between the first relay device and the first terminal.

A specific determining manner is the same as the manner in which the second terminal determines whether there already is the PC5 link between the second terminal and the first relay device. Details are not described herein again.

There are the following two cases in which whether there is the PCS link between the first relay device and the first terminal.

Case 1: There is no PC5 link between the first relay device and the first terminal, and step 510a is performed.

Step 510a is similar to step 410a in FIG. 4A, FIG. 4B, FIG. 4C, FIG. 4D, and FIG. 4E, and a difference lies in that the direct communication accept message sent by the first relay device to the first terminal does not include the identifier 1.

Case 2: If there already is the PC5 link between the first relay device and the first terminal, step 510b is performed.

The first relay device sends a link modification request message to the first terminal.

The link modification request message may include an application layer identifier of the second terminal.

The link modification request message indicates the first relay device to transmit data of the first terminal through the first PCS link.

The first PCS link is used by the first terminal to communicate with the second terminal by using the first relay device.

*511:* After the first terminal receives the direct communication accept message (refer to step 510a) or the link modification request message (refer to step 510b) sent by the first relay device, a ProSe layer of the first terminal stores a correspondence between the application layer identifier of the second terminal and the identifier 1. When the first terminal sends data to the second terminal according to the correspondence, the first terminal may include the identifier 1 in the sent data packet.

In addition, the first terminal also stores, at the ProSe layer, a correspondence between the application layer identifier of the second terminal and identification information of the first PCS link. The first terminal sends data to the second terminal through the first PC5 link according to the correspondence.

Step 512 and step 513 are the same as step 414 and step 415 in FIG. 4A, FIG. 4B, FIG. 4C, FIG. 4D, and FIG. 4E. Details are not described herein again.

514: The ProSe layer of the first relay device provides the identifier of the second PC5 link and a source layer 2 identifier and a destination layer 2 identifier that are used by the PC5 link for an AS layer of the first relay device.

It should be understood that the source layer 2 identifier herein is a layer 2 identifier of the first relay device, and the destination layer 2 identifier is a layer 2 identifier of the second terminal.

Optionally, the layer 2 identifier used by the second PC5 link may alternatively be the layer 2 identifier of the second terminal.

In addition, as shown in step 514, the ProSe layer of the first relay device may further provide the identifier of the second PCS link, the layer 2 identifier of the first relay device, and the identifier 1 for the AS layer of the first relay device.

It should be understood that if there already is the PCS link between the second terminal and the first relay device, that is, the second PCS link is reused, step 514 is not performed.

515: The AS layer of the first relay device stores a correspondence between the identifier 1, the layer 2 identifier of the first relay device, and the identifier of the second PCS link.

Step 516 to step 520 are similar to steps 418 to 422 in FIG. 4A, FIG. 4B, FIG. 4C, FIG. 4D, and FIG. 4E. Details are not described herein again.

In this embodiment of this application, when sending data to different target terminals by using the first relay device, the first terminal reuses the PC5 link between the first terminal and the first relay device, thereby reducing a quantity of PCS links that need to be established, and reducing signaling overheads for maintaining the PC5 link.

It should be understood that in the solution shown in FIG. 5A, FIG. 5B, FIG. 5C, and FIG. 5D, for ease of description, only one target terminal, that is, the second terminal, is used as an example for description. It should be understood that this solution can be further applied to a case in which there are N target terminals. This is not limited in this application.

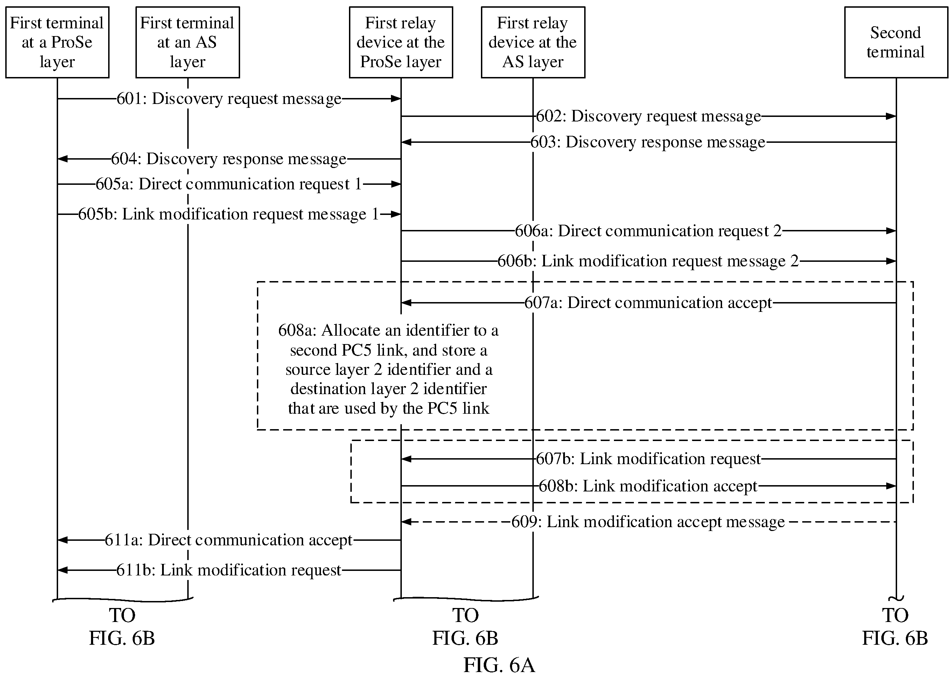

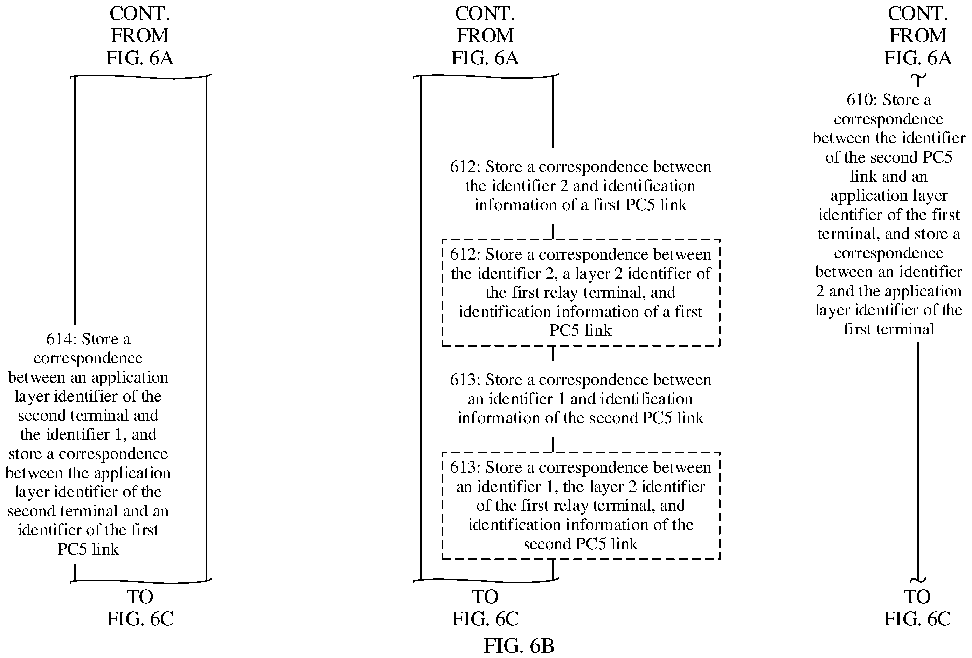

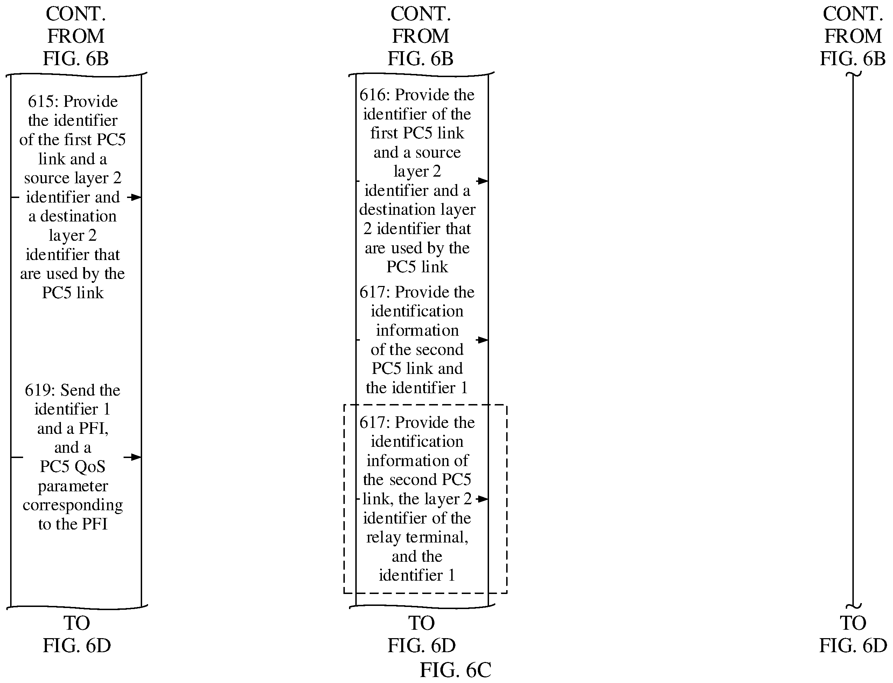

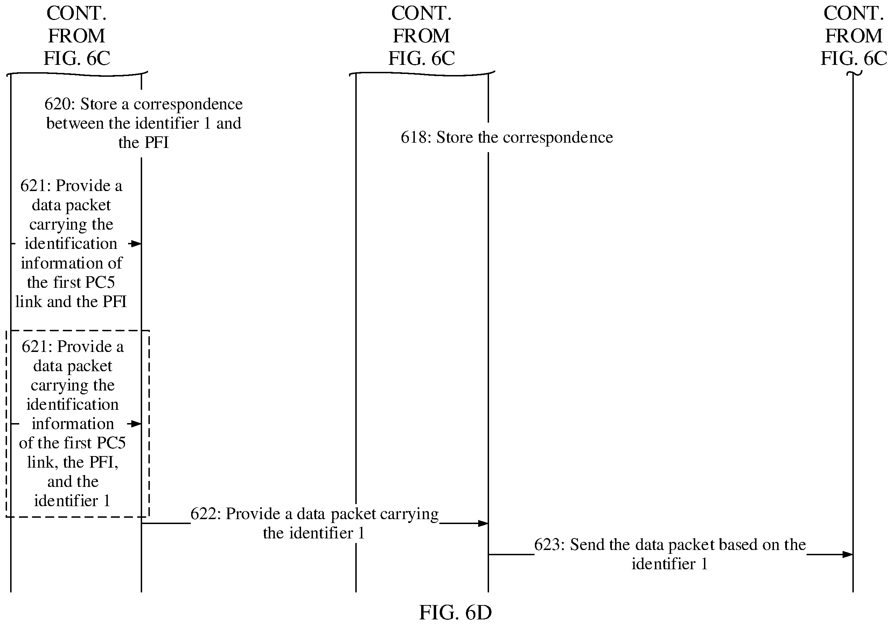

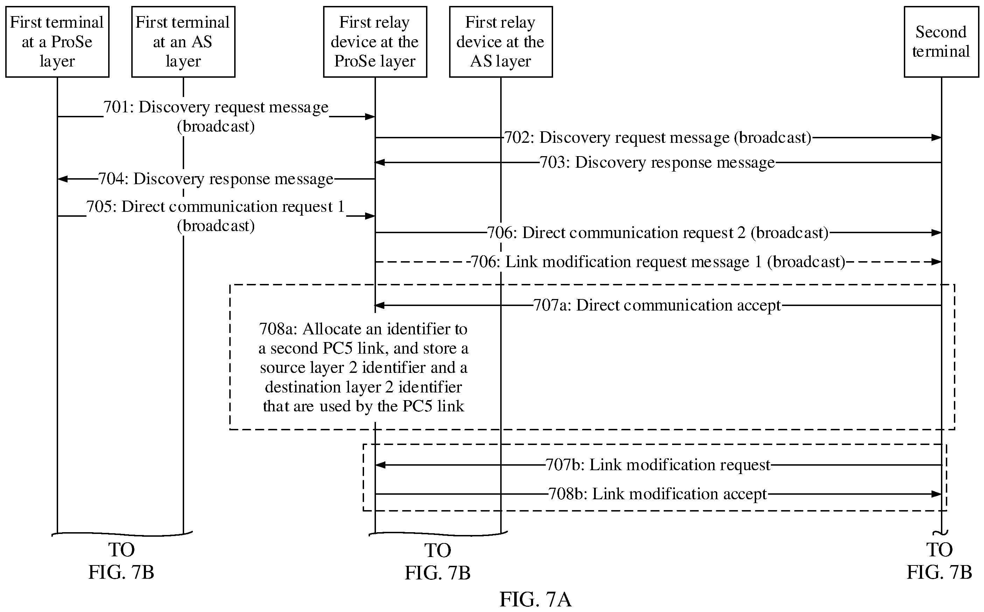

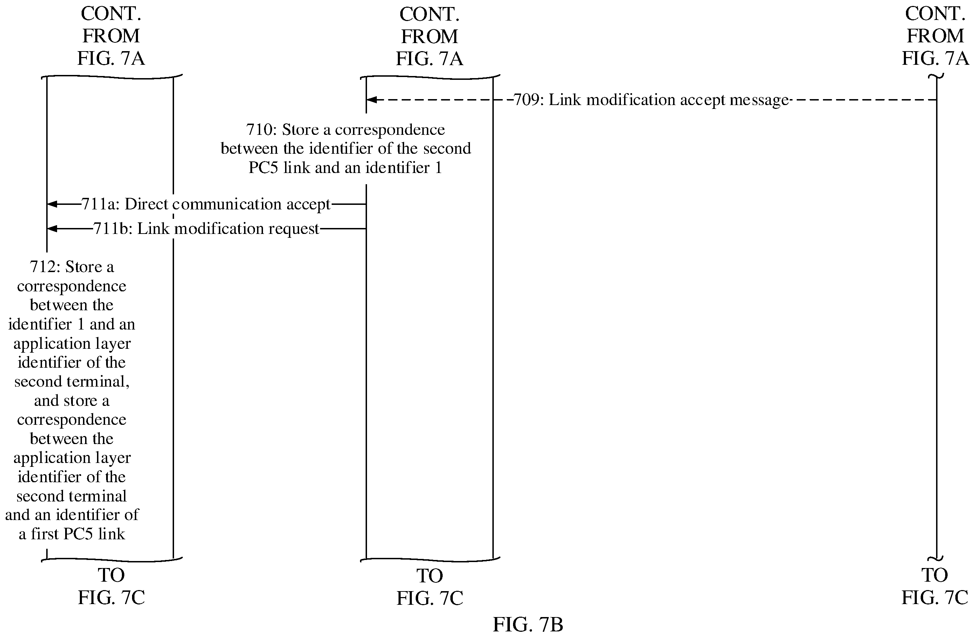

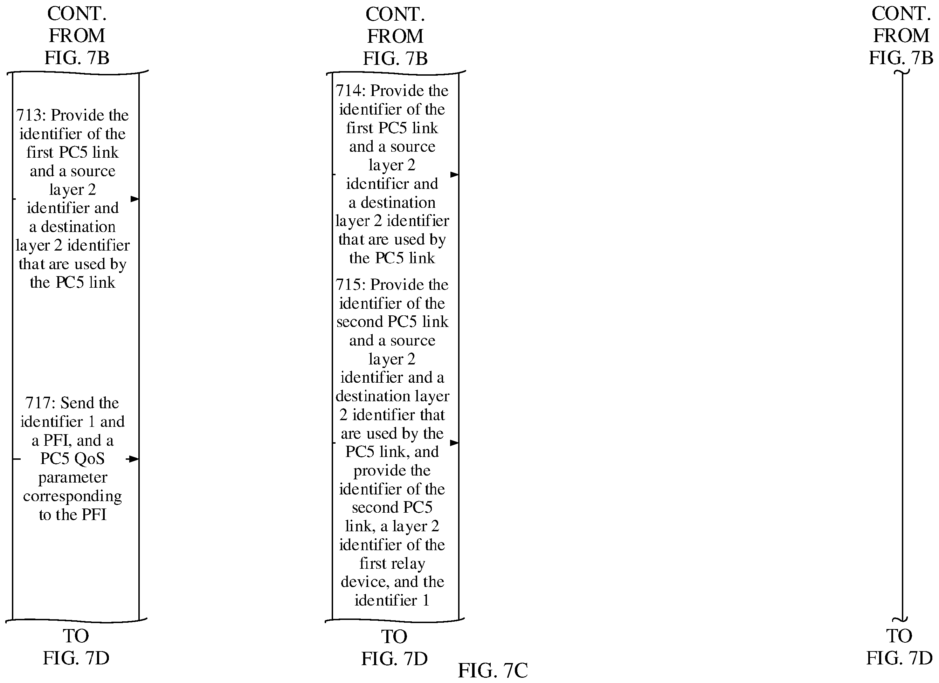

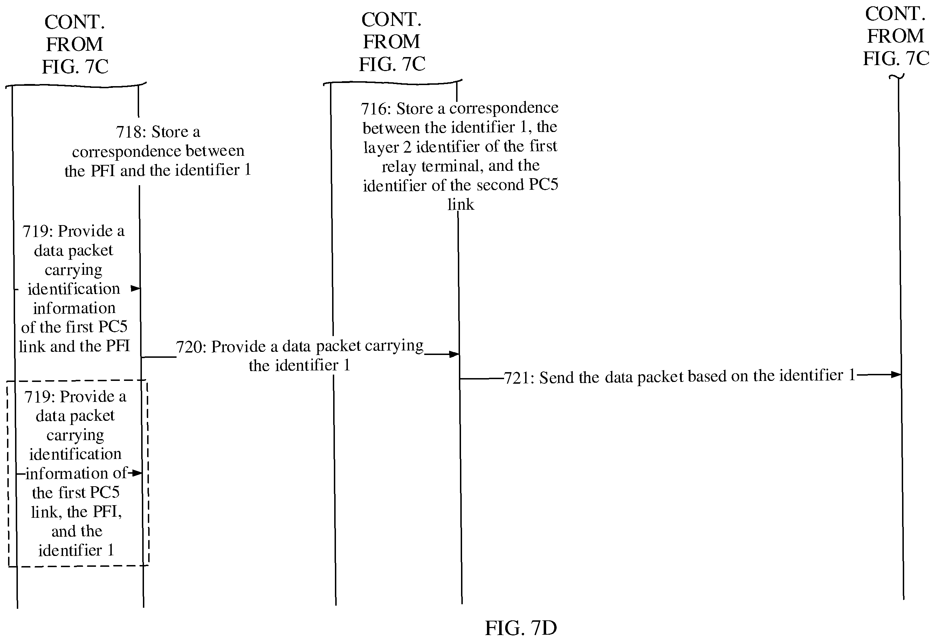

In FIG. 4A, FIG. 4B, FIG. 4C, FIG. 4D, and FIG. 4E and FIG. 5A, FIG. 5B, FIG. 5C, and FIG. 5D, discovery of the relay device and selection of the relay device are already performed in the connection establishment process, that is, a separate discovery process of the relay device is not required. FIG. 6A, FIG. 6B, FIG. 6C, and FIG. 6D and FIG. 7A, FIG. 7B, FIG. 7C, and FIG. 7D describe cases in which the discovery process and the connection establishment process of the relay device are performed separately.

FIG. 6A, FIG. 6B, FIG. 6C, and FIG. 6D are a schematic flowchart of another communication method according to this application. In the solution described in FIG. 6A, FIG. 6B, FIG. 6C, and FIG. 6D, a discovery process of a relay device is first performed before connection establishment and data transmission, the relay device is selected in the discovery process of the relay device, and then a first terminal completes a connection establishment process with a second terminal by using the selected relay device. The selected relay device sends an identifier of the second terminal to the first terminal, and the selected relay device sends an identifier of the first terminal to the second terminal.

It should be understood that the first relay device in FIG. 4A, FIG. 4B, FIG. 4C, FIG. 4D, and FIG. 4E or FIG. 5A, FIG. 5B, FIG. 5C, and FIG. 5D may be a candidate relay device described below, and the second relay device may also be the candidate relay device described below.

In addition, in the solution shown in FIG. 6A, FIG. 6B, FIG. 6C, and FIG. 6D, a process of establishing a link between the first terminal and the second terminal is initiated by the first terminal.

601: The first terminal sends a discovery request message in a broadcast form.

The discovery request message includes an application layer identifier of the first terminal and an application layer identifier of a target terminal (that is, an application layer identifier of the second terminal).

602: After receiving the discovery request message, a candidate relay device broadcasts the discovery request message.

The candidate relay device may be the first relay device or may be the second relay device shown in FIG. 6A, FIG. 6B, FIG. 6C, and FIG. 6D. This is not limited in this application.

The discovery request message includes an application layer identifier of the first terminal, an application layer identifier of the target terminal (that is, the application layer identifier of the second terminal), and an application layer identifier of the candidate relay device.

The candidate relay device uses a layer 2 address of the candidate relay device as a source layer 2 identifier. The second terminal selects one relay device from candidate relay devices to communicate with the first terminal.

Specifically, the second terminal measures signal strength of the received discovery request message, and selects a relay device with high signal strength as the relay device communicating with the first terminal.

For ease of description, it is assumed that the second terminal selects the first relay device to communicate with the first terminal.

603: The second terminal receives the discovery request message, and sends a discovery response message to the first relay device.

604: After the first relay device receives the discovery response message, the first relay device sends the discovery response message to the first terminal.

Step 601 to step 604 are the discovery and selection process of the relay device. After the relay device is selected, a connection is established between the first terminal and the second terminal by using the relay device. A specific process is described below.

605: The first terminal determines whether there is a PC5 link between the first terminal and the first relay device. There are two cases in which whether there is the PCS link between the first terminal and the first relay device.

Case 1: There is no PC5 link between the first relay device and the first terminal.

605a: The first terminal sends a direct communication request message 1 to the first relay device. Correspondingly, the first relay device receives the direct communication request message 1.

The direct communication request message 1 is used by the first terminal to request to communicate with the second terminal.

The direct communication request message 1 includes an application layer identifier of the second terminal.

Case 2: there already is the PC5 link between the first relay device and the first terminal.

605b: The first terminal sends a link modification request message 1 to the first relay device. Correspondingly, the first relay device receives the link modification request message 1.

The link modification request message 1 includes an application layer identifier of the second terminal.

606: The first relay device determines whether there is a PCS link between the first relay device and the second terminal.

Specifically, there are the following two cases in which whether there is the PCS link between the first relay device and the second terminal.

Case 1: There is no PCS link between the second terminal and the first relay device.

606a: When the application layer identifier of the second terminal in the direct communication request message 1 is inconsistent with an application layer identifier of the first relay device, the first relay device sends a direct communication request message 2 to the second terminal.

The direct communication request message 2 may include the application layer identifier of the first terminal, the application layer identifier of the second terminal, and the application layer identifier of the first relay device.

Case 2: There is the PCS link between the second terminal and the first relay device.

606b: When the application layer identifier of the second terminal in the direct communication request message 1 is inconsistent with an application layer identifier of the first relay device, the first relay device sends the link modification request message 1 to the second terminal.

The link modification request message 1 may include an identifier of the first terminal, which is denoted as an identifier 2.

The identifier of the first terminal may be an application layer identifier of the first terminal. Alternatively, the identifier of the first terminal is a temporary identifier allocated by the first relay device to the first terminal, or a layer 2 identifier of the first terminal.

Specifically, when the identifier of the first terminal is the application layer identifier of the first terminal, the link modification request message 1 may further include an application layer identifier of the second terminal and an application layer identifier of the first relay device. Alternatively, when the identifier of the first terminal is not the application layer identifier of the first terminal, the link modification request message 1 may further include an application layer identifier of the first terminal, an application layer identifier of the second terminal, and an application layer identifier of the first relay device.

Step 607 and step 623 are the same as step 406 and step 422 in FIG. 4A, FIG. 4B, FIG. 4C, FIG. 4D, and FIG. 4E. Details are not described herein again.

FIG. 7A, FIG. 7B, FIG. 7C, and FIG. 7D are a schematic flowchart of another communication method according to this application. In the solution shown in FIG. 7A, FIG. 7B, FIG. 7C, and FIG. 7D, a discovery process of a relay device is first performed, and the relay device is selected in the discovery process of the relay device. Then, a first terminal completes a connection establishment process with a second terminal by using the selected relay device, and the first terminal sends an identifier of the second terminal to the first relay device. The second terminal sends an identifier of the first terminal to the first relay device.

Step 701 to step 704 are the same as step 601 to step 604. Details are not described herein again.

705: The first terminal sends a direct communication request message to the first relay device.

The direct communication request message is used by the first terminal to request to communicate with the second terminal.

The direct communication request message may include an application layer identifier of the second terminal and an identifier of the second terminal, which is denoted as an identifier 1.

The identifier of the second terminal may be a layer 2 identifier of the second terminal, or a temporary identifier allocated by the first relay device to the second terminal.

Alternatively, the identifier of the second terminal may be the application layer identifier of the second terminal. In this case, the direct communication request message may further include only the application layer identifier of the second terminal.

Step 706 is the same as step 503. Details are not described herein again.

Steps 707 to 721 are the same as steps 506 to 520. Details are not described herein again.

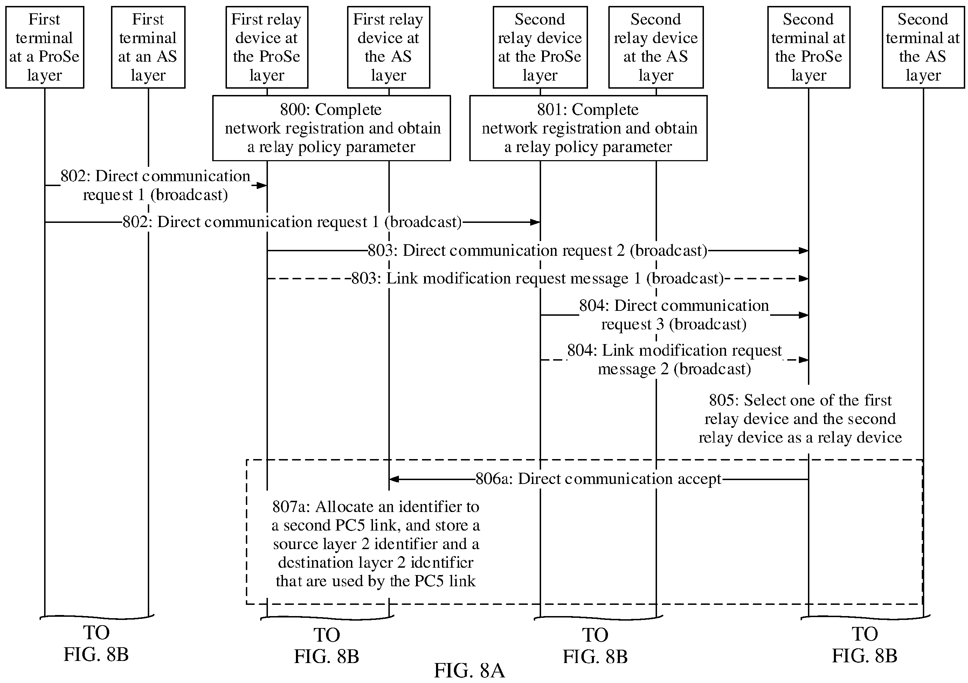

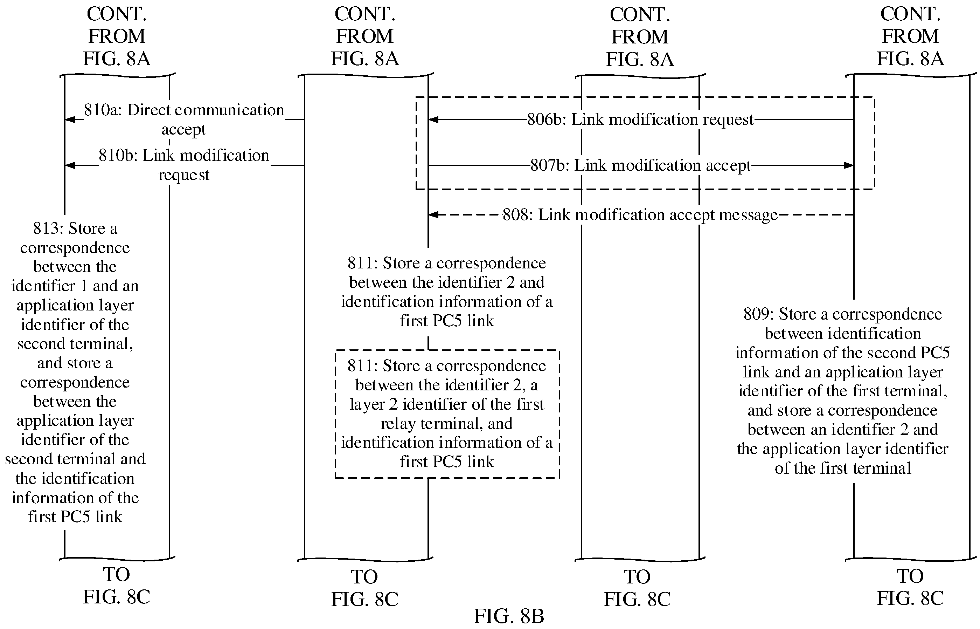

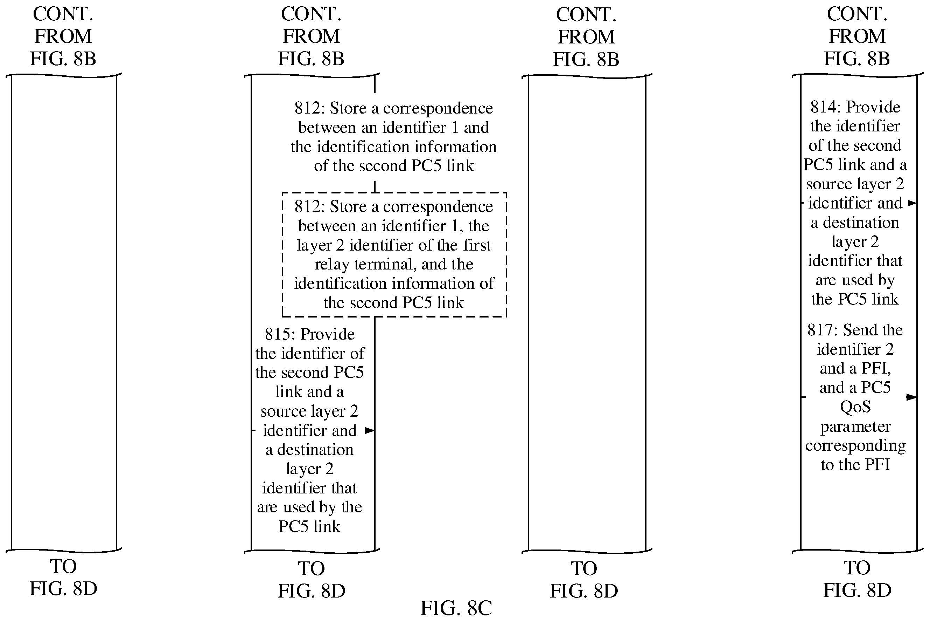

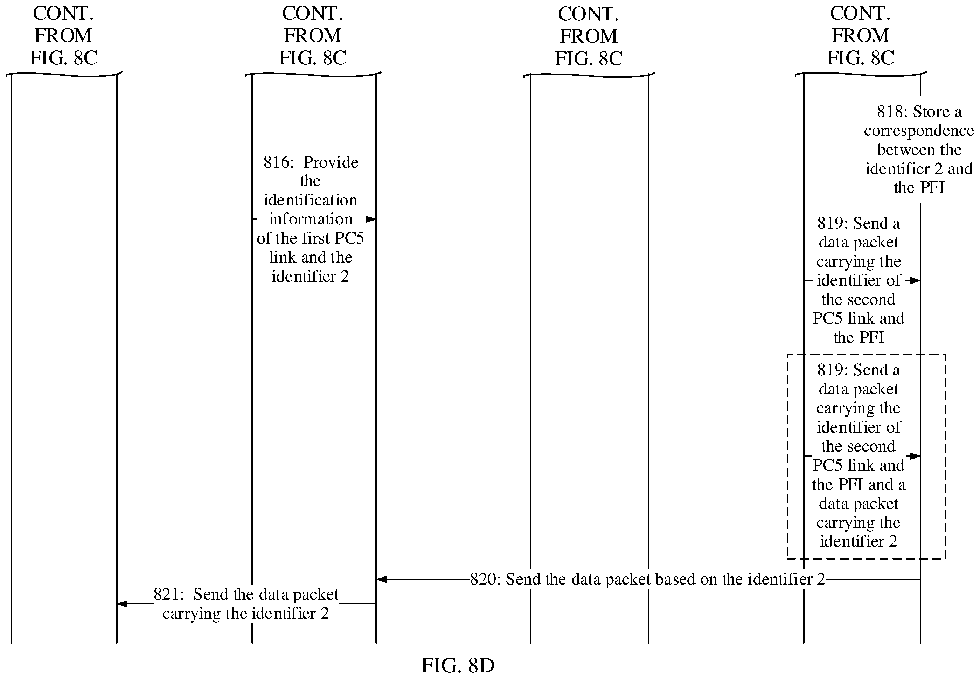

FIG. 3 to FIG. 7A, FIG. 7B, FIG. 7C, and FIG. 7D describe the specific process in which the first terminal sends the data to the second terminal by using the first relay device. In this embodiment of this application, the second terminal may further send data to the first terminal by using the first relay device, as shown in FIG. 8A, FIG. 8B, FIG. 8C, and FIG. 8D.

In addition, in the solution shown in FIG. 8A, FIG. 8B, FIG. 8C, and FIG. 8D, the identifier of the second terminal is sent by the relay device to the first terminal, and the identifier of the first terminal is sent by the relay device to the second terminal.

A connection establishment process in step 800 to step 813 is the same as that in step 400 to step 413 in FIG. 4A, FIG. 4B, FIG. 4C, FIG. 4D, and FIG. 4E. Details are not described herein again.

After a PCS link between the first terminal and the first relay device and a PCS link between the first relay device and the second terminal are established, inter-layer interaction exists between the first terminal, the first relay device, and the second terminal.

814: A first PC5 link is newly established between the second terminal and the first relay device, and the ProSe layer of the second terminal provides an identifier of the second PCS link and a source layer 2 identifier and a destination layer 2 identifier that are used by the PCS link for an AS layer of the second terminal.

It should be understood that the source layer 2 identifier herein is a layer 2 identifier of the first relay device, and the destination layer 2 identifier is a layer 2 identifier of the second terminal.

It should be understood that if there already is the PCS link between the second terminal and the first relay device, that is, the second PCS link is reused, step 814 is not performed.

815: The ProSe layer of the first relay device provides an identifier of the second PC5 link and a source layer 2 identifier and a destination layer 2 identifier that are used by the PC5 link for an AS layer of the first relay device.

It should be understood that the source layer 2 identifier herein is a layer 2 identifier of the first relay device, and the destination layer 2 identifier is a layer 2 identifier of the second terminal.

It should be understood that if there already is the PCS link between the second terminal and the first relay device, that is, the second PCS link is reused, step 815 is not performed.

816: The ProSe layer of the first relay device provides identification information of the first PC5 link, a source layer 2 identifier and a destination layer 2 identifier that are used by the PCS link, and the identifier 2 for an AS layer of the first relay device.

It should be understood that the source layer 2 identifier herein is a layer 2 identifier of the first terminal, and the destination layer 2 identifier is a layer 2 identifier of the first relay device.

Optionally, the ProSe layer of the first relay device provides the identification information of the first PC5 link and the identifier 2 for the AS layer of the first relay device.

817: The ProSe layer of the second terminal provides the identifier 2, a PFI, and a PC5 QoS parameter corresponding to the PFI for the AS layer of the second terminal.

Specifically, the second terminal is used to transmit data of the first terminal based on the QoS flow corresponding to the PFI, and provides the identifier 2 and the PFI for the AS layer of the second terminal. The second terminal determines, according to a QoS rule of the QoS flow, where the QoS rule includes the application layer identifier of the first terminal or the layer 2 identifier of the first terminal, that the QoS flow is used to transmit the data of the first terminal.

818: The AS layer of the second terminal stores a correspondence between the PFI and the identifier 2.

A process of performing data transmission after the PC5 link between the first terminal and the first relay device and the PCS link between the first relay device and the second terminal are established, as described below, includes step 819 to step 821.

819: The ProSe layer of the second terminal receives a data packet from the application layer, and the ProSe layer of the second terminal provides the data packet for the AS layer of the second terminal.

The data packet includes the identifier of the second PC5 link and the PFI. The identifier of the second PC5 link and the PFI are also sent to the AS layer of the second terminal along with the data packet.

Optionally, in some embodiments, the application layer carries the application layer identifier of the first terminal along with the data packet, and the second terminal may determine, based on the application layer identifier of the first terminal, that a target terminal of the data packet is the first terminal.

Optionally, in some other embodiments, the second terminal may receive a data packet sent through an inherent channel between the first terminal and the application layer, to determine that a target terminal of the data packet is the first terminal. The inherent channel is used only for communication between the first terminal and the second terminal.

The ProSe layer of the second terminal determines an identifier of a PC5 link corresponding to the application layer identifier of the first terminal. Specifically, the second terminal determines the identifier of the second PCS link according to the correspondence that is between the application layer identifier of the first terminal and the identifier of the second PCS link and that is stored at the ProSe layer. It should be understood that the identifier of the PCS link herein refers to the identifier of the second PCS link, that is, data of the first terminal is transmitted through the second PCS link.

The ProSe layer of the second terminal determines the QFI according to a QoS rule, where the QoS rule includes the application layer identifier of the first terminal or the layer 2 identifier of the first terminal.

Optionally, in this embodiment of this application, the ProSe layer of the second terminal receives the data packet from the application layer, and the ProSe layer of the second terminal sends the data packet to the AS layer of the second terminal. The identifier of the second PC5 link, the PFI, and the identifier 2 are also sent to the AS layer of the second terminal along with the data packet. Specifically, the second terminal determines the identifier 1 according to the correspondence, stored in step 806, between the application layer identifier of the first terminal and the identifier 2. Optionally, the application layer carries the application layer identifier of the first terminal along with the data packet.

820: The AS layer of the second terminal sends a data packet carrying the identifier 2.

Specifically, the AS layer of the second terminal adds information about the identifier 2 to a header of the sent data packet according to the correspondence between the PFI and the identifier 2 or based on the identifier 2 received along with the data packet.

The AS layer of the second terminal determines a source layer 2 identifier and a destination layer 2 identifier based on the identifier of the second PCS link, where the source layer 2 identifier is a layer 2 identifier of the second terminal, and the destination layer 2 identifier is a layer 2 identifier of the first relay device, and adds the layer 2 identifier of the second terminal and the layer 2 identifier of the first relay device to the header of the data packet. The AS layer of the second terminal determines an AS layer configuration based on information about the PFI, and the AS layer uses the layer 2 identifier of the second terminal and the layer 2 identifier of the first relay device, and the AS layer configuration to send corresponding data.

It should be noted that the AS layer includes an RLC layer and a MAC layer, and may further include an adaptation layer. Specifically, the adaptation layer (Adaptation layer) may be introduced between the RLC layer (Radio Link Control layer) and the MAC layer (Multiple Access Control layer), and the adaptation layer adds information about the identifier 2 to the data packet.

The AS layer of the second terminal sends the data packet to the AS layer of the first relay device based on the layer 2 identifier of the second terminal and the layer 2 identifier of the first relay device, and the data packet carries the identifier 2.

In some embodiments, the ProSe layer of the second terminal does not need to send the correspondence between the PFI and the identifier 2 to the AS layer of the second terminal by using step 811, but when the ProSe layer of the second terminal sends the data packet to the AS layer of the second terminal, the identifier of the second PC5 link, the PFI, and the identifier 2 are carried along with the data packet.

821: The first relay device forwards the data packet based on the identifier 2.

Specifically, the first relay device receives the data packet sent by the second terminal, and the AS layer of the first relay device determines whether the layer 2 identifier of the first relay device of the data packet is a layer 2 identifier allocated by the first relay device to the first relay device. If no, the first relay device discards the data packet; and if yes, the first relay device further needs to distinguish whether the received data packet from the second terminal is a data packet sent to the first relay device or a data packet that needs to be forwarded by the first relay device.

In some embodiments, the data packet received by the first relay device is the data packet that needs to be forwarded by the first relay device. A determining manner is the same as that described in FIG. 4A, FIG. 4B, FIG. 4C, FIG. 4D, and FIG. 4E. Details are not described herein again.

It should be understood that, in this embodiment of this application, the discovery process of the relay device may be first performed, the relay device is selected in the discovery process of the relay device, and then a communication link is established by using the selected relay device. Further, the second terminal transmits data to the first terminal by using the selected relay device, and the selected relay device sends the identifier of the first terminal to the second terminal.

It should be understood that, for ease of description, only one source terminal, that is, the first terminal, is used as an example for description. It should be understood that this solution can be further applied to a case in which there are M source terminals. This is not limited in this application.

Optionally, in this embodiment of this application, when the second terminal sends data to the first terminal, the first terminal may further send the identifier of the second terminal to the first relay device.

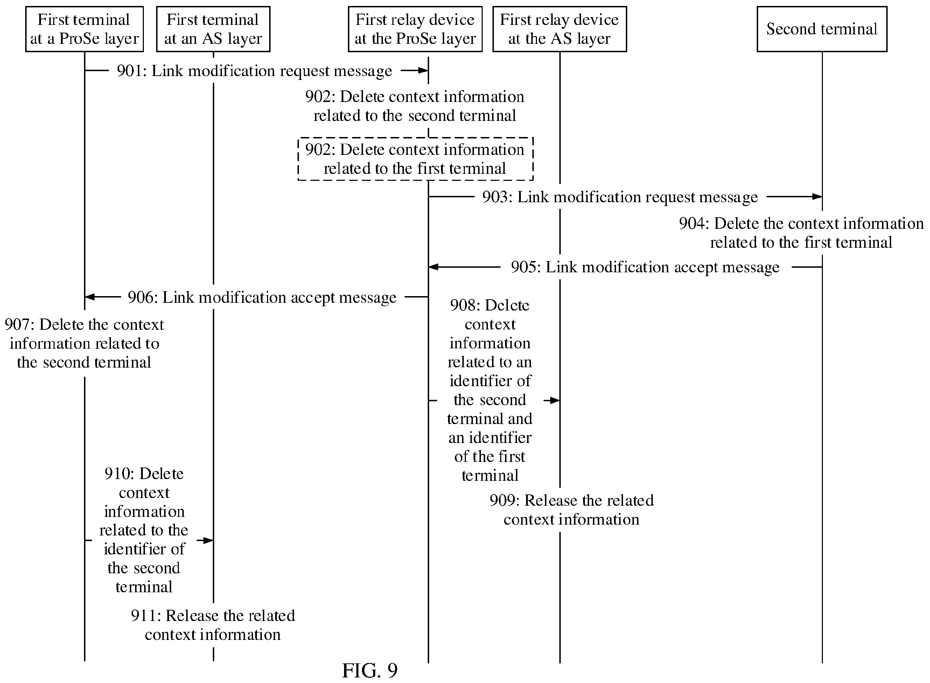

FIG. 9 is a link splitting process between the first terminal and the second terminal after the first terminal sends the data to the second terminal by using the first relay device. The splitting process is as follows.

901: The first terminal sends a link modification request message to the first relay device. Correspondingly, the first relay device receives the link modification request message.

The message includes an identifier of the second terminal, or the message includes an application layer identifier of the second terminal. The message is used to request the relay device to delete context information related to the second terminal. Alternatively, the message is used to request the relay device to delete context information related to communication between the first terminal and the second terminal.

902: After receiving the link modification request message, the first relay device deletes context information related to the second terminal.

The context information related to the second terminal includes at least one of the following: a first correspondence, stored in the first relay device, between an identifier 1 and identification information of the second PCS link, and a second correspondence, stored in the first relay device, between an identifier 1, a layer 2 identifier of the first relay device, and identification information of the second PCS link.

Optionally, after receiving the link modification request message, the first relay device further deletes context information related to the first terminal.

The context information related to the first terminal includes at least one of the following: a correspondence between an identifier of the first terminal, a layer 2 identifier of the first relay device, and an identifier of the first PCS link, or a correspondence between an identifier of the first terminal and an identifier of the first PCS link.

903: The first relay device sends a link modification request message to the second terminal. Correspondingly, the second terminal receives the link modification request message.

The message includes an identifier of the first terminal or an application layer identifier of the first terminal. The message is used to request the second terminal to delete context information related to the first terminal, or the message is used to request to release a PC5 link used for communication with the first terminal.

The context information includes at least one of the following: a correspondence between an identifier of the first terminal and identification information of the second PC5 link, a correspondence between an application layer identifier of the first terminal and an identifier of the second PCS link, or a correspondence between an identifier of the first terminal and an application layer identifier of the first terminal.

904: After receiving the link modification request message, the second terminal deletes the context information related to the first terminal.

The context information includes at least one of the following: a correspondence between an identifier of the first terminal and identification information of the second PC5 link, a correspondence between an application layer identifier of the first terminal and an identifier of the second PCS link, or a correspondence between an identifier of the first terminal and an application layer identifier of the first terminal.

905: The second terminal sends a link modification accept message to the first relay device.

It should be understood that, in this embodiment of this application, step 902 may be performed after step 905.

Optionally, in this embodiment of this application, in step 902, after receiving the link modification request message, the first relay device deletes only the context information related to the second terminal. After step 905, the first relay device deletes the context information related to the first terminal.

906: The first relay device sends a link modification accept message to the first terminal.

907: After the first terminal receives the link modification accept message sent by the first relay device, the first terminal deletes the context information related to the second terminal. The context information includes a correspondence between an application layer identifier of the second terminal and an identifier of the second terminal, and a correspondence between an application layer identifier of the second terminal and an identifier of the first PC5 link. After the link between the first terminal and the first relay device and the link between the first relay device and the second terminal are removed, inter-layer interaction exists between the first terminal, the first relay device, and the second terminal. Details are described in the following.

908: The ProSe layer of the first relay device requests the AS layer of the first relay device to delete context information related to the identifier of the second terminal and context information related to the identifier of the first terminal. The context information related to the identifier of the second terminal includes: a correspondence between an identifier of the second terminal, a layer 2 identifier of the first relay device, and an identifier of the second PCS link, or a correspondence between an identifier of the second terminal and an identifier of the second PCS link. The context information related to the identifier of the first terminal includes: a correspondence between an identifier of the first terminal, a layer 2 identifier of the first relay device, and an identifier of the first PCS link, or a correspondence between an identifier of the first terminal and an identifier of the first PC5 link.

909: The AS layer of the first relay device releases the related context information.

910: The ProSe layer of the first terminal requests the AS layer of the first relay device to delete context information related to the identifier of the second terminal. The context information includes a correspondence between an identifier of the second terminal and a QFI.

911: The AS layer of the first terminal releases the related context information.

It should be understood that, in some other embodiments of this application, the second terminal can communicate with the first terminal by using the first relay device. After the communication process ends, the link splitting process is similar to the process described in FIG. 8A, FIG. 8B, FIG. 8C, and FIG. 8D. In a process of inter-layer interaction, inter-layer interaction is mainly performed between the second terminal and the first relay device. Details are not described herein again.

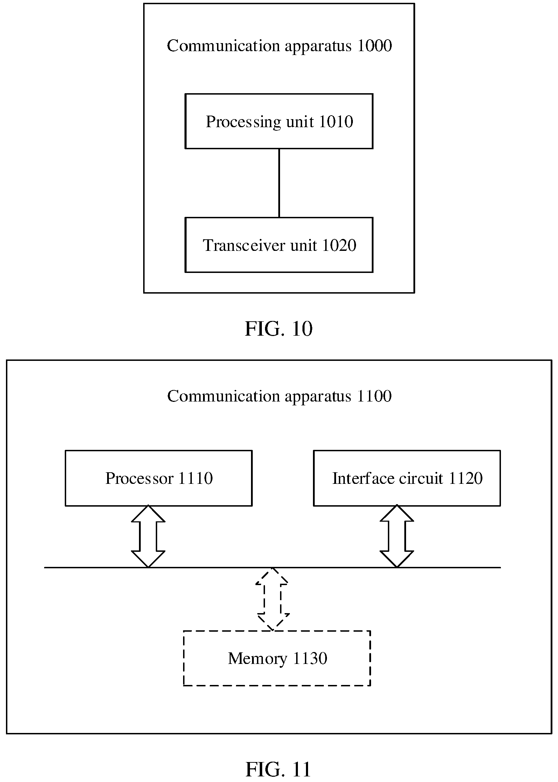

The foregoing describes, in detail with reference to FIG. 3 to FIG. 9, the communication methods provided in embodiments of this application. The following describes in detail communication apparatuses provided in embodiments of this application with reference to FIG. 10 and FIG. 11.

FIG. 10 is a schematic block diagram of a communication apparatus 1000 according to an embodiment of this application. As shown in FIG. 10, the communication apparatus 1000 includes a processing unit 1010 and a transceiver unit 1020.

Optionally, the communication apparatus 1000 may correspond to the first terminal, the first relay device, the second relay device, or the second terminal in the foregoing method embodiments, for example, may be the first terminal, the first relay device, the second relay device, or the second terminal, or a component (such as a circuit, a chip, or a chip system) configured in the first terminal, the first relay device, the second relay device, or the second terminal.

It should be understood that the communication apparatus 1000 may include units configured to perform the methods performed by the first terminal, the first relay device, the second relay device, or the second terminal in the methods shown in FIG. 3 to FIG. 10.

Specifically, units in the communication apparatus 1000 are used to implement corresponding procedures of the methods shown in FIG. 3 to FIG. 10. The processing unit may be configured to perform steps other than receiving and sending steps, and the transceiver unit performs the receiving and sending steps.

The following uses an example to describe a case in which the communication apparatus 1000 corresponds to the first terminal in the foregoing method embodiment.

For example, when the communication apparatus 1000 is configured to perform the steps performed by the first terminal in FIG. 3, the transceiver unit 1020 may be configured to perform step 301, 305, or 307.

When the communication apparatus 1000 is configured to perform the steps performed by the first terminal in FIG. 4A, FIG. 4B, FIG. 4C, FIG. 4D, and FIG. 4E, the processing unit 1010 may be configured to perform steps 413 and 419, and the transceiver unit 1020 may be configured to perform steps 402, 410, 414, 418, 420, and 421.

When the communication apparatus 1000 is configured to perform the steps performed by the first terminal in FIG. 5A, FIG. 5B, FIG. 5C, and FIG. 5D, the processing unit 1010 may be configured to perform steps 511 and 517, and the transceiver unit 1020 may be configured to perform steps 502, 510, 512, 516, 518, and 519.

When the communication apparatus 1000 is configured to perform the steps performed by the first terminal in FIG. 6A, FIG. 6B, FIG. 6C, and FIG. 6D, the processing unit 1010 may be configured to perform steps 614 and 620, and the transceiver unit 1020 may be configured to perform steps 601, 604, 605, 611, 615, 619, 621, and 622.

When the communication apparatus 1000 is configured to perform the steps performed by the first terminal in FIG. 7A, FIG. 7B, FIG. 7C, and FIG. 7D, the processing unit 1010 may be configured to perform steps 712 and 718, and the transceiver unit 1020 may be configured to perform steps 701, 704, 711, 713, 717, 719, and 720.

When the communication apparatus 1000 is configured to perform the steps performed by the first terminal in FIG. 8A, FIG. 8B, FIG. 8C, and FIG. 8D, the processing unit 1010 may be configured to perform step 813, and the transceiver unit 1020 may be configured to perform steps 802, 810a, 810b, and 821.

When the communication apparatus 1000 is configured to perform the steps performed by the first terminal in FIG. 9, the processing unit 1010 may be configured to perform steps 907 and 911, and the transceiver unit 1020 may be configured to perform steps 901, 906, and 910.

The following uses an example to describe a case in which the communication apparatus 1000 corresponds to the first relay device in the foregoing method embodiment.

When the communication apparatus 1000 is configured to perform the steps performed by the first relay device in FIG. 4A, FIG. 4B, FIG. 4C, FIG. 4D, and FIG. 4E, the processing unit 1010 may be configured to perform steps 407a, 411 and 412, and 417, and the transceiver unit 1020 may be configured to perform steps 402, 403, 404, 415 and 416, and 421 and 422.

When the communication apparatus 1000 is configured to perform the steps performed by the first relay device in FIG. 5A, FIG. 5B, FIG. 5C, and FIG. 5D, the processing unit 1010 may be configured to perform steps 507a, 509, and 515, and the transceiver unit 1020 may be configured to perform steps 502, 503, 506a, 507b, 508, 513 and 514, and 519 and 520.

When the communication apparatus 1000 is configured to perform the steps performed by the first relay device in FIG. 6A, FIG. 6B, FIG. 6C, and FIG. 6D, the processing unit 1010 may be configured to perform steps 608a, 612 and 613, and 618, and the transceiver unit 1020 may be configured to perform steps 601 to 604, 605a and 605b, 606a and 606b, 607a, 607b, 608b, 609, 617 and 618, and 622 and 623.

When the communication apparatus 1000 is configured to perform the steps performed by the first relay device in FIG. 7A, FIG. 7B, FIG. 7C, and FIG. 7D, the processing unit 1010 may be configured to perform steps 708a and 716. The transceiver unit 1020 may be configured to perform steps 701 to 704, 706a, 707a, 707b, 708b, 709, 714 and 715, and 720 and 721.

When the communication apparatus 1000 is configured to perform the steps performed by the first relay device in FIG. 8A, FIG. 8B, FIG. 8C, and FIG. 8D, the processing unit 1010 may be configured to perform steps 807a, and 811 and 812. The transceiver unit 1020 may be configured to perform steps 803, 806a and 806b, 807b, 808, 815 and 816, and 820.

When the communication apparatus 1000 is configured to perform the steps performed by the first relay device in FIG. 9, the processing unit 1010 may be configured to perform steps 902 and 909, and the transceiver unit 1020 may be configured to perform steps 901 to 906, and 908.

The following uses an example to describe a case in which the communication apparatus 1000 corresponds to the second terminal in the foregoing method embodiment.

When the communication apparatus 1000 is configured to perform the steps performed by the second terminal in FIG. 3, the transceiver unit 1020 may be configured to perform step 302.

When the communication apparatus 1000 is configured to perform the steps performed by the second terminal in FIG. 4A, FIG. 4B, FIG. 4C, FIG. 4D, and FIG. 4E, the processing unit 1010 may be configured to perform steps 405 and 409, and the transceiver unit 1020 may be configured to perform steps 403 and 404, 406a, 406b, 407b, 408, and 422.

When the communication apparatus 1000 is configured to perform the steps performed by the second terminal in FIG. 5A, FIG. 5B, FIG. 5C, and FIG. 5D, the processing unit 1010 may be configured to perform step 505, and the transceiver unit 1020 may be configured to perform steps 503 and 504, 506a, 506b, 507b, 508, and 520.

When the communication apparatus 1000 is configured to perform the steps performed by the second terminal in FIG. 6A, FIG. 6B, FIG. 6C, and FIG. 6D, the processing unit 1010 may be configured to perform step 610. The transceiver unit 1020 may be configured to perform steps 602 and 603, 606a, 606b, 607a, 607b, 608b, 609, and 623.

When the communication apparatus 1000 is configured to perform the steps performed by the second terminal in FIG. 7A, FIG. 7B, FIG. 7C, and FIG. 7D, the transceiver unit 1020 may be configured to perform steps 702, 703, 706, 707a, 707b, 708b, 709, and 721.

When the communication apparatus 1000 is configured to perform the steps performed by the second terminal in FIG. 8A, FIG. 8B, FIG. 8C, and FIG. 8D, the processing unit 1010 may be configured to perform steps 809 and 818. The transceiver unit 1020 may be configured to perform steps 803, 806a, 807b, 814, 817, and 819 and 820.

When the communication apparatus 1000 is configured to perform the steps performed by the second terminal in FIG. 9, the processing unit 1010 may be configured to perform step 904, and the transceiver unit 1020 may be configured to perform steps 903 and 905.

It should be further understood that when the communication apparatus 1000 is the first terminal, the first relay device, or the second terminal, the transceiver unit 1020 in the communication apparatus 1000 may be implemented by using a transceiver, and the processing unit 1010 may be implemented by using at least one processor.

It should be further understood that, when the communication apparatus 1000 is configured on the first terminal, the first relay device, or the second terminal, the transceiver unit 1020 in the communication apparatus 1000 may be implemented by using an input/output interface, a circuit, or the like. The processing unit 1010 may be implemented by using a processor, a microprocessor, an integrated circuit, or the like integrated in the chip or a chip system.

It should be understood that a specific process in which the units perform the foregoing corresponding steps is described in detail in the foregoing method embodiments, and for brevity, details are not described herein.

FIG. 11 is another schematic block diagram of a communication apparatus 1100 according to an embodiment of this application. As shown in FIG. 11, the communication apparatus 1100 includes a processor 1110 and an interface circuit 1120. The processor 1110 and the interface circuit 1120 are coupled to each other.

It may be understood that the interface circuit 1120 may be a transceiver or an input/output interface. When the communication apparatus 1100 is configured to implement the methods shown in FIG. 3 to FIG. 10, the processor 1110 is configured to execute the function of the processing unit 1010, and the interface circuit 1020 is configured to execute the function of the transceiver unit 1120.

Optionally, the communication apparatus 1100 may further include a memory 1130 for storing instructions executed by the processor 1110, or input data required by the processor 1110 to run the instructions, or data generated after the processor 1110 runs the instructions.

It may be understood that the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any regular processor or the like.

Further embodiments of the present application are provided in the following. It should be noted that the numbering used in the following section does not necessarily need to comply with the numbering used in the previous sections.

Embodiment 1. A communication method, comprising: receiving, by a relay device, a first data packet from a first terminal through a first transmission link, wherein the first data packet comprises an identifier of a second terminal and data to be sent to the second terminal, the first transmission link is a transmission link between the relay device and the first terminal, the first transmission link is used by the first terminal to communicate with at least two communication devices, and the at least two communication devices comprise the second terminal; and sending, by the relay device, a second data packet to the second terminal through a second transmission link based on the identifier of the second terminal, wherein the second data packet comprises the data to be sent to the second terminal, and the second transmission link is a transmission link between the relay device and the second terminal.

Embodiment 2. The method according to embodiment 1, wherein the at least two communication devices further comprise a third terminal, and the method further comprises: receiving, by the relay device, a third data packet from the third terminal through a third transmission link, wherein the third data packet comprises an identifier of the first terminal and data to be sent to the first terminal, and the third transmission link is a transmission link between the relay device and the third terminal; and sending, by the relay device, a fourth data packet to the first terminal through the first transmission link based on the identifier of the first terminal, wherein the fourth data packet comprises the data to be sent to the first terminal.

Embodiment 3. The method according to embodiment 1 or 2, wherein the at least two communication devices further comprise a fourth terminal, and the method further comprises: receiving, by the relay device, a fifth data packet from the first terminal through the first transmission link, wherein the fifth data packet comprises an identifier of the fourth terminal and data to be sent to the fourth terminal; and sending, by the relay device, a sixth data packet to the fourth terminal through a fourth transmission link based on the identifier of the fourth terminal, wherein the sixth data packet comprises the data to be sent to the fourth terminal, and the fourth transmission link is a transmission link between the relay device and the fourth terminal.

Embodiment 4. The method according to any one of embodiments 1 to 3, wherein the at least two communication devices further comprise the relay device, and the method further comprises: receiving, by the relay device, a seventh data packet from the first terminal through the first transmission link; and if the seventh data packet does not comprise an identifier of any terminal, or the seventh data packet comprises an identifier of the relay device, obtaining, by the relay device, data in the seventh data packet.

Embodiment 5. The method according to any one of embodiments 1 to 4, wherein the sending, by the relay device, a second data packet to the second terminal through a second transmission link based on the identifier of the second terminal comprises: obtaining, by the relay device, identification information of the second transmission link based on the identifier of the second terminal and a correspondence; and sending, by the relay device, the second data packet to the second terminal through the second transmission link based on the identification information of the second transmission link, wherein the correspondence comprises:
a correspondence between the identifier of the second terminal and the identification information of the second transmission link; or
a correspondence between the identifier of the second terminal, a layer 2 identifier of the relay device, and the identification information of the second transmission link.

Embodiment 6. The method according to embodiment 5, wherein the identification information of the second transmission link comprises a layer 2 identifier of the second terminal corresponding to the second transmission link.

Embodiment 7. The method according to embodiment 5 or 6, wherein the obtaining, by the relay device, identification information of the second transmission link based on the identifier of the second terminal and a correspondence comprises: obtaining, by an access stratum AS layer of the relay device, the identification information of the second transmission link based on the identifier of the second terminal and the correspondence.

Embodiment 8. The method according to any one of embodiments 5 to 7, wherein the method further comprises: providing, by a proximity-based service ProSe layer of the relay device, the identifier of the second terminal and the identification information of the second transmission link for the AS layer of the relay device; and establishing, by the AS layer of the relay device, the correspondence.

Embodiment 9. The method according to any one of embodiments 5 to 7, wherein the method further comprises: providing, by a ProSe layer of the relay device, the identifier of the second terminal, the layer 2 identifier of the relay device, and the identification information of the second transmission link for the AS layer of the relay device; and establishing, by the AS layer of the relay device, the correspondence.

Embodiment 10. The method according to any one of embodiments 1 to 9, wherein the first data packet further comprises the layer 2 identifier of the relay device.

Embodiment 11. The method according to any one of embodiments 1 to 10, wherein the identifier of the second terminal comprises:
the layer 2 identifier of the second terminal;
a temporary identifier allocated by the relay device to the second terminal;
an application layer identifier of the second terminal; or
a temporary identifier allocated by the first terminal to the second terminal.

Embodiment 12. The method according to any one of embodiments 1 to 11, wherein the method further comprises: sending, by the relay device, the identifier of the second terminal to the first terminal.

Embodiment 13. The method according to embodiment 12, wherein the identifier of the second terminal is carried in a link modification request message or a direct communication accept message.

Embodiment 14. The method according to any one of embodiments 1 to 11, wherein the method further comprises: receiving, by the relay device, the identifier of the second terminal from the first terminal.

Embodiment 15. The method according to embodiment 14, wherein the identifier of the second terminal is carried in a direct communication request message or a link modification request message.

Embodiment 16. The method according to any one of embodiments 1 to 15, wherein the method further comprises: sending, by the relay device, the identifier of the relay device to the first terminal, wherein the identifier of the relay device is a temporary identifier allocated by the relay device to the relay device, the layer 2 identifier of the relay device, or an application layer identifier of the relay device; or receiving, by the relay device, the identifier of the relay device from the first terminal, wherein the identifier of the relay device is a temporary identifier allocated by the first terminal to the relay device.

Embodiment 17. The method according to any one of embodiments 1 to 16, wherein the method further comprises: sending, by the relay device, the identifier of the first terminal to the second terminal, wherein the identifier of the first terminal is the temporary identifier allocated by the relay device to the first terminal, a layer 2 identifier of the first terminal, or an application layer identifier of the first terminal.

Embodiment 18. The method according to embodiment 17, wherein the identifier of the first terminal is carried in the direct communication request message or the link modification request message.

Embodiment 19. A communication method, comprising: sending, by a first terminal, a first data packet to a relay device through a first transmission link, wherein the first data packet comprises an identifier of a second terminal and data to be sent to the second terminal, and the first transmission link is a transmission link between the first terminal and the relay device; and the first transmission link is used by the first terminal to communicate with at least two communication devices, and the at least two communication devices comprise the second terminal.

Embodiment 20. The method according to embodiment 19, wherein the method further comprises: receiving, by the first terminal, a fourth data packet from the relay device through the first transmission link, wherein the fourth data packet comprises data to be sent to the first terminal.

Embodiment 21. The method according to embodiment 19 or 20, wherein the at least two communication devices further comprise a fourth terminal, and the method further comprises: sending, by the first terminal, a fifth data packet to the relay device through the first transmission link, wherein the fifth data packet comprises an identifier of the fourth terminal and data to be sent to the fourth terminal.

Embodiment 22. The method according to any one of embodiments 19 to 21, wherein the at least two communication devices further comprise the relay device, and the method further comprises: sending, by the first terminal, a seventh data packet to the relay device through the first transmission link, wherein the seventh data packet comprises data to be sent to the relay device; or the seventh data packet comprises an identifier of the relay device and data to be sent to the relay device.

Embodiment 23. The method according to any one of embodiments 19 to 22, wherein the method further comprises: generating, by the first terminal, the first data packet.

Embodiment 24. The method according to embodiment 23, wherein the generating, by the first terminal, the first data packet comprises: generating, by an access stratum AS layer of the first terminal, the first data packet based on the identifier of the second terminal and the data to be sent to the second terminal.

Embodiment 25. The method according to embodiment 23 or 24, wherein the first data packet further comprises a layer 2 identifier of the relay device.

Embodiment 26. The method according to embodiment 24, wherein the method further comprises: receiving, by the AS layer of the first terminal, an identifier of a quality of service QoS flow, wherein the QoS flow is used to carry the data to be sent to the second terminal, and the first transmission link comprises the QoS flow; and obtaining, by the AS layer of the first terminal, the identifier of the second terminal based on a correspondence between the identifier of the QoS flow and the identifier of the second terminal.

Embodiment 27. The method according to embodiment 26, wherein the method further comprises: providing, by a proximity-based service ProSe layer of the first terminal, the identifier of the second terminal and the identifier of the QoS flow for the AS layer of the first terminal; and establishing, by the AS layer of the first terminal, the correspondence between the identifier of the QoS flow and the identifier of the second terminal.

Embodiment 28. The method according to embodiment 26, wherein the method further comprises: determining, by the ProSe layer of the first terminal, the identifier of the second terminal; and providing, by the ProSe layer of the first terminal, the identifier of the second terminal and the data to be sent to the second terminal to the AS layer of the first terminal.

Embodiment 29. The method according to any one of embodiments 19 to 28, wherein the identifier of the second terminal comprises:
a layer 2 identifier of the second terminal;
a temporary identifier allocated by the relay device to the second terminal;
an application layer identifier of the second terminal; or
a temporary identifier allocated by the first terminal to the second terminal.

Embodiment 30. The method according to any one of embodiments 19 to 29, wherein the method further comprises: sending, by the first terminal, the identifier of the second terminal to the relay device.

Embodiment 31. The method according to embodiment 30, wherein the identifier of the second terminal is carried in a link modification request message or a direct communication accept message.

Embodiment 32. The method according to any one of embodiments 19 to 29, wherein the method further comprises: receiving, by the first terminal, the identifier of the second terminal from the relay device.

Embodiment 33. The method according to embodiment 32, wherein the identifier of the second terminal is carried in a direct communication request message or a link modification request message.

Embodiment 34. The method according to any one of embodiments 19 to 33, wherein the method further comprises: receiving, by the first terminal, the identifier of the relay device from the relay device, wherein the identifier of the relay device is a temporary identifier allocated by the relay device to the relay device, a layer 2 identifier of the relay device, or an application layer identifier of the relay device; or sending, by the first terminal, the identifier of the relay device to the relay device, wherein the identifier of the relay device is a temporary identifier allocated by the first terminal to the relay device.

Embodiment 35. A communication apparatus, wherein the apparatus is configured to perform the method according to any one of embodiments 1 to 18.

Embodiment 36. A communication apparatus, wherein the apparatus is configured to perform the method according to any one of embodiments 19 to 34.

Embodiment 37. A computer-readable storage medium, wherein the computer-readable storage medium stores a computer program executed by a device, and the computer program comprises program instructions for performing the method according to any one of embodiments 1 to 34.

Embodiment 38. A chip, wherein the chip comprises a processor and a data interface, and the processor reads, through the data interface, program instructions stored in a memory, to perform the method according to any one of embodiments 1 to 34.

Embodiment 39. A communication system, wherein the system comprises a relay device and a first terminal; the relay device is configured to perform the method according to any one of embodiments 1 to 19; and the first terminal is configured to perform the method according to any one of embodiments 20 to 34.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, **characterized by** comprising:
receiving (301), by a relay device, a first data packet from a first terminal through a first transmission link, wherein the first data packet comprises an identifier of a second terminal and data to be sent to the second terminal, the first transmission link is a transmission link between the relay device and the first terminal, the first transmission link is used for the first terminal communicating with at least two communication devices, and the at least two communication devices comprise the second terminal; and
sending (302), by the relay device, a second data packet to the second terminal through a second transmission link based on the identifier of the second terminal, wherein the second data packet comprises the data to be sent to the second terminal, and the second transmission link is a transmission link between the relay device and the second terminal.

2. The method according to claim 1, wherein the sending, by the relay device, a second data packet to the second terminal through a second transmission link based on the identifier of the second terminal comprises:
obtaining, by the relay device, identification information of the second transmission link based on the identifier of the second terminal and a correspondence; and
sending, by the relay device, the second data packet to the second terminal through the second transmission link based on the identification information of the second transmission link, wherein
the correspondence comprises:
a correspondence between the identifier of the second terminal and the identification information of the second transmission link; or
a correspondence between the identifier of the second terminal, a layer 2 identifier of the relay device, and the identification information of the second transmission link.

3. The method according to claim 2, wherein the obtaining, by the relay device, identification information of the second transmission link based on the identifier of the second terminal and a correspondence comprises:
obtaining, by an access stratum, AS, layer of the relay device, the identification information of the second transmission link based on the identifier of the second terminal and the correspondence.

4. The method according to claim 2 or 3, wherein the method further comprises:
providing (416), by a proximity-based service, ProSe, layer of the relay device, the identifier of the second terminal and the identification information of the second transmission link for the AS layer of the relay device; and
establishing, by the AS layer of the relay device, the correspondence.

5. The method according to any one of claims 1 to 4, wherein the method further comprises: sending, by the relay device, the identifier of the second terminal to the first terminal.

6. A communication apparatus (1100), comprising at least one processor (1110) coupled to a memory (1130), wherein the at least one processor (1110) is configured to invoke a computer program from the memory (1130) and run the computer program, to perform the following method:
receiving a first data packet from a first terminal through a first transmission link, wherein the first data packet comprises an identifier of a second terminal and data to be sent to the second terminal, the first transmission link is a transmission link between a relay device and the first terminal, the first transmission link is used for the first terminal communicating with at least two communication devices, and the at least two communication devices compri se the second terminal; and
sending a second data packet to the second terminal through a second transmission link based on the identifier of the second terminal, wherein the second data packet comprises the data to be sent to the second terminal, and the second transmission link is a transmission link between the relay device and the second terminal.

7. The communication apparatus according to claim 6, wherein the at least one processor is further configured to:
obtain identification information of the second transmission link based on the identifier of the second terminal and a correspondence; and
send the second data packet to the second terminal through the second transmission link based on the identification information of the second transmission link, wherein
the correspondence comprises:
a correspondence between the identifier of the second terminal and the identification information of the second transmission link; or
a correspondence between the identifier of the second terminal, a layer 2 identifier of the relay device, and the identification information of the second transmission link.

8. The communication apparatus according to claim 7, wherein the at least one processor is further configured to:
obtain, by using an access stratum, AS, layer of the relay device, the identification information of the second transmission link based on the identifier of the second terminal and the correspondence.

9. The method according to claim 7 or 8, wherein the method further comprises:
provid, by using a proximity-based service, ProSe, layer of the relay device, the identifier of the second terminal and the identification information of the second transmission link for the AS layer of the relay device; and
establish, by using the AS layer of the relay device, the correspondence.

10. The communication apparatus according to any one of claims 6 to 9, wherein the at least one processor is further configured to:
send the identifier of the second terminal to the first terminal.

11. A computer-readable storage medium, wherein the computer-readable storage medium stores a computer program executed by a device, and the computer program comprises program instructions for performing the method according to any one of claims 1 to 5.
